# EUROPEAN PATENT SPECIFICATION

(11) **EP 4 294 543 B1**
(45) Date of publication and mention of the grant of the patent: **01.04.2026**
(21) Application number: 22707163.6
(22) Date of filing: 22.02.2022
(51) Int. Cl.: B01D 19/00, C02F 1/20, F24D 19/08

(54) **LOW PRESSURE DEGASSING DEVICE**
NIEDERDRUCKENTGASUNGSVORRICHTUNG
DISPOSITIF DE DÉGAZAGE BASSE PRESSION

(30) Priority: 22.02.2021 NL 2027613; 22.11.2021 NL 2029857
(43) Date of publication of application: 27.12.2023
(73) Proprietor: Aalberts hfc B.V., 1358 DB Almere (NL)
(72) Inventor: CNOSSEN, Jan Henk, 8723 CP KOUDUM (NL)
(74) Representative: EP&C
(86) International application number: PCT/EP2022/054447
(87) International publication number: WO 2022/175560

(56) References cited:
- EP-A1- 1 820 550
- EP-A1- 3 036 025
- WO-A1-2017/184050
- US-A- 4 602 923
- US-A- 4 718 922
- US-A- 5 601 635
- US-B1- 6 447 579
- US-B2- 7 850 767

## Description

### FIELD OF THE INVENTION

The invention relates to the field of degassing a gas-containing liquid in a cooling or heating installation and in particular to a device and a method for degassing the liquid.

### BACKGROUND OF THE INVENTION

In the field of degassing liquids, various devices and methods exist.

US2011214571A1 discloses a degassing device that makes use of a vacuum chamber to locally reduce pressure in order to separate gasses from a liquid. The device comprises a channel through which the liquid flows, wherein the liquid also passes through a vacuum chamber. In this vacuum chamber, the main flow channel is delimited by a permeable region through which gasses may pass but the liquid may not.

Outside of this permeable region, an enclosure is located to which a vacuum pump is connected. This vacuum pump has been configured to create a continuous vacuum level in the enclosure in order for the liquid to degas. Further, a vent is connected to the enclosure to permit a venting flow to enter the vacuum chamber to reduce condensation within the enclosure.

In the present invention, it has been recognized that such a device presents several drawbacks. The use of a permeable region allows a certain amount of liquid to migrate into the enclosure causing contamination of the enclosure, and therewith contamination of the vacuum pump, and over time may reduce the amount of liquid in the main flow channel. Further, over time, the permeable region will also degrade due to a build-up of contaminants. This build-up prevents gas passing through, ultimately leading to degassing no longer being possible.

Also, because a continuous vacuum is required to operate the device, the device will likely consume a lot of energy. Further, a vent that feeds gas from the outside to the enclosure will only lead to the vacuum pump needing to work harder to maintain the desired vacuum level and consuming even more energy.

Additionally, a vacuum pump makes a lot of noise and a continuously operating pump even more so. This makes is less suitable for domestic applications.

EP3764001A1 discloses a device wherein a portion of a main flow is branched off through a bypass, flows through a venturi device and enters a degassing chamber. On another side of the degassing chamber, the branched off portion is returned to the main flow.

Additionally, a degassing conduit leads from a suction area to the bypass and joins the bypass in the venturi device. In this degassing conduit the pressure is lower than in the rest of the circuit because of the venturi device. The lower pressure causes the dissolved gasses to separate and the gases can then be evacuated through a ventilator in the degassing chamber.

A drawback of the device is that the liquid in the circuit must always be moving at a certain velocity to make the venturi device work by creating a pressure difference between the return flow and the branch flow. If the velocity is not sufficient an extra pump is needed to create the pressure difference. This results in either a not optimally working device or in an expensive device due to the need of an extra pump. Such a pump would also increase the energy consumption of the device.

Additionally, because the system is dependent on the velocity of the liquid in the circuit it may be difficult to control the pressures in the system and therewith the degassing process.

US4602923A discloses an apparatus for degasifying a liquid medium. The apparatus comprises a non-return gas valve 41 which is used to prevent air from flowing in while allowing separated gas to flow out (col. 5 In. 44-49). Herein, the non-return gas valve 41, the exhaust gas valve 40 and the floater that closes off the device from the outside are located above a possible liquid level. D1 has a disadvantage in this respect, namely that the degasification is quite inefficient as a result of the air inside the degasification zone, which hinders the depressurization.

EP3036025A1 discloses a device that is configured to degas a liquid in a fluid system. A part of a liquid in a main flow channel is branched off and is subsequently passed through a filter, an actuated valve, a non-return valve, a reservoir, a pump, and another non-return valve before returning to the main flow channel. When the reservoir is filled to a desired level, the actuated valve is closed and the pump is operated to lower the pressure in the reservoir to release gasses from the liquid.

A drawback of this device is that a pump must be operated together with an actuated valve. In order to do so, a relatively complex control mechanism needs to be in place. Further, because pumps are generally loud and inefficient, the device is believed to be less suited for domestic use.

EP1820550A1 discloses a method for degassing a liquid comprising a gas, such as water, in a cooling or heating system. Part of the liquid is conducted through a section of the cooling/heating system provided with venting means. Said section is provided with venting means. The liquid, which is present in said section, is subjected to vibrations. To this end, a vibrating element is used which is in contact with the liquid, in the reduced-pressure vessel. The invention furthermore relates to a degassing device. The degassing device comprises a section having a supply duct and a discharge duct for the liquid; venting means for discharging gas from the section; as well as vibrating means for subjecting the liquid present in the section to vibrations. The venting means comprise a float which opens a shut-off valve when a liquid level drops below a predetermined value and closes the shut-off valve when the liquid level rises above the predetermined value.

### OBJECT OF THE INVENTION

It is an object of the invention to provide a device and a method for degassing a liquid and, in doing so, overcoming at least one of the abovementioned drawbacks.

### SUMMARY OF THE INVENTION

In order to achieve the object, the present invention provides a degassing device according to claim 1.

The present invention results in efficient degassing. Because the outlet closing body is submerged (under the liquid level), there is no or little air (gas) in the degasification zone. As a result the compressibility (or perhaps the negative compressibility) is low, resulting in an efficient pressure reduction step which in turn results in an efficient degasification.

In an embodiment, the device comprises two flow passages, a first flow passage being a branch flow passage, the branch flow passage being configured to branch off a branch flow being a portion of the main flow, and a second flow passage being a return flow passage extending between the degasification zone and the main flow channel, the return flow channel being configured to return a return flow to the main flow.

By branching of a portion of a main flow of the cooling or heating installation and by obstructing the branch flow passage and/or the return flow passage, the pressure reduction device can reduce the pressure to which the branched off portion, i.e. the branch flow, is subjected. When the pressure is reduced to a level below the pressure inside the main flow channel, gasses that are dissolved in the liquid will become less soluble and will separate from the liquid. The gasses that have been separated from the liquid can then be removed from the degassing device before the liquid joins the main flow. In doing so, the amount of dissolved gasses in the liquid in the cooling or heating installation can be reduced.

When at first a liquid is at a level where the floater is in a floating position and the liquid level starts to drop as a result of the operation of the pressure reduction device, the floater moves downwards to the lower position where it engages an end of the outlet tube and closes off the outlet tube. Not only does the floater replace the need for an actively operated gas outlet valve, by closing off the outlet tube as soon as the liquid has flown out of the outlet tube, the floater reduces the amount of free gas inside the degasification zone. This, in turn, facilitates the reduction of pressure and may increase the amount of gas that can be separated from the gas-containing liquid.

In an embodiment, the degassing device may comprise a first valve which is moveable between a closed position and an open position, wherein in the closed position the first valve obstructs the branch flow passage and closes off the degasification zone from the main flow channel. A second valve which is moveable between a closed position and an open position may be used to obstruct the return flow passage to close off the degasification zone from the main flow channel.

By using two separate valves to be able to close off the branch flow passage and the return flow passage, the two valves may be placed at a distance from each other along the main flow. In doing so, the renewal of liquid in the degasification housing may be increased.

In an embodiment, the pressure reduction device is connected to the degasification housing and the pressure reduction device comprises a piston, a cylinder, and a piston actuator. The piston is moveable between an idle pressure position and a low pressure position and is in open communication with the inner volume. In the low pressure position of the piston the degasification zone extends into the cylinder and is larger than in the idle pressure position of the piston. Herein, the degasification zone is delimited by the degasification housing, and at least part of an outer surface of the piston and/or by at least a part of the inner surface of the cylinder. The piston actuator may be one of a mechanical actuator, electrical actuator, magnetic actuator, hydraulic actuator, and pneumatic actuator.

By moving the piston from the idle pressure position to the low pressure position, the degasification zone is pulled into the cylinder and becomes larger than in the idle pressure position of the housing. Because the volume of the degasification zone increases while the content of the degasification zone, i.e. the amount of liquid inside the degasification zone, remains substantially the same, the pressure to which the liquid in the degasification zone is subjected is reduced. The reduced pressure causes the liquid to degas.

In an embodiment, a retracted position of the piston corresponds to the low pressure position and an extended position of the piston corresponds to the idle pressure position. Alternatively, the extended position of the piston corresponds to the low pressure position and the retracted position of the piston corresponds to the idle pressure position.

In the first case, the piston actuator will pull on the piston to move the piston to the low pressure position and in the second case, the piston actuator will push on the piston to move the piston to the low pressure position.

In an embodiment, the piston actuator is fixed to the degasification housing via one or more resilient members and the piston actuator is resiliently moveable between a first actuator position and a second actuator position.

The piston actuator may be fixed to the degasification housing via the one or more resilient member in order to be able to absorb mechanical vibrations.

In an embodiment, the piston is at least partially moveable within the cylinder.

In an embodiment, the piston is moveable in a direction that is substantially parallel to the main flow channel. By positioning the pressure reduction device in an orientation that allows the piston to move in a direction substantially parallel to the main flow channel, an efficient use of space can be achieved. Because the direction is substantially parallel to the main flow channel, the space occupied by the degassing device in a direction away from the main flow channel can be reduced.

In an embodiment, the piston is moveable in a direction that is substantially orthogonal to the main flow channel. By positioning the pressure reduction device in an orientation that allows the piston to move in a direction substantially orthogonal to the main flow channel, an another efficient use of space can be achieved. Because the direction is substantially orthogonal to the main flow channel, the space occupied by the degassing device in a direction along the main flow channel can be reduced.

In an embodiment, the piston is in direct contact with the liquid and preferably no membrane is present between the piston and the degasification zone. Because no membrane is present, the device becomes more robust and may require less maintenance. The absence of a membrane means that there is one less part that can malfunction and that there is no membrane that may clog, inhibiting the working of the device. Because the piston may directly act on the liquid without first having to deform an elastic member such as a membrane, a pressure reduction can be achieved faster.

In an embodiment, the piston comprises at least one seal, in particular two seals located at a distance from each other, in particular the seals being O-rings, more in particular the seals being double lip seals. Such seals may be used to increase the performance of the pressure reduction device by increasing sealing capabilities and therefore loss of pressure difference.

In an embodiment, the pressure reduction device is located in a lower part of the degasification housing and the pressure reduction device is configured to be operated below a liquid level in the degasification housing.

By being able to place the pressure reduction device in a lower part of the degasification housing and the pressure reduction device being configured to be operated below the liquid level, the pressure reduction device can be positioned close to the main flow channel. This may reduce the amount of space taken up by the degassing device.

In an embodiment, the piston comprises an actuator end and the first valve is a non-return valve. The actuator end is configured to engage the first valve, wherein the movement of the piston from the retracted state to the extended state moves the first valve from an idle closed position to the open position via the actuator end. The movement of the piston from the extended state to the retracted state moves the first valve from the open position to an idle closed position via the actuator end.

In an embodiment, the branch flow passage extends through the cylinder between the main flow channel and the degasification zone and the piston movement is configured to move the first valve to the closed state. In doing so, in a single operation of the piston can be used to close off the branch flow passage and reduce the pressure inside the degasification zone. Thereby, no additional actuator is needed to move the first valve to the closed state.

In an embodiment, a cavity is located in the cylinder and between the main flow channel and the piston, wherein a branch flow path extends through the cavity.

In an embodiment, the cylinder defines a branch flow hole, wherein the branch flow path extends through the branch flow passage, through the cavity and through the branch flow hole into the inner volume.

In an embodiment, the branch flow passage is defined by the cylinder, the branch flow hole and the piston.

In an embodiment, the first valve is integrated in the pressure reduction device, in particular in the piston, wherein the piston comprises a part which obstructs the branch flow path in the low pressure position. The movement of the piston to the low pressure position herein also closes off the branch flow passage. This does not only result in one less actuator to close of the branch flow passage, but also requires one moving part less, potentially reducing necessary maintenance.

In an embodiment, the second valve is a non-return valve. In such an embodiment, when the pressure is reduced by the pressure reduction device, the relatively higher pressure in the main flow channel forces the second non-return valve to the closed state. In doing so, no actuator may be necessary to close off the valve.

In an embodiment, the outlet closing body comprises a gas outlet valve that allows gas and/or liquid to flow between the outside and the degasification zone in an open state, and closes off the degasification zone in a closed position, in particular the gas outlet valve being a ball valve or a non-return valve. In doing so the entire degasification zone can be filled with liquid and the degassing of the liquid can be performed more efficiently than in a situation where more liquid and/or more gas would initially be present, because the pressure reduction can be attained more easily and faster.

The floater chamber comprises the overflow valve (also called a float valve) defining a gas outlet opening and when a liquid level is higher than a second predetermined level (also called the overflow threshold level), the outlet closing body is moved to an upper position, closing the overflow valve. In doing so, when an amount of liquid flowing into the degasification housing risks overflowing the degasification housing, the gas outlet opening is closed off by the floater inhibiting the liquid to spill out of the degassing device. Thereafter, the liquid will either stop flowing in through the branch flow passage or will enter through the branch flow passage and will flow out through the return flow passage.

In an embodiment, the floater comprises a protrusion located on a lower side of the floater and an outer dimension of the protrusion substantially matches an inner dimension of the outlet tube. Such a protrusion may increase the sealing capabilities of the floater.

In an embodiment, the overflow valve comprises a backflow preventer configured to allow gas to escape but not to enter the gas outlet, in particular the backflow preventer being a non-return valve. When the pressure reduction device is operated, the backflow preventer prevents more particles to be sucked into the degasification zone. In doing so, a volume increase more effectively and efficiently lowers the pressure because no particles can be added to the volume.

In an embodiment, the floater comprises an O-ring to close off the outlet tube in the lower position and/or an O-ring to close off the gas outlet in the upper position. In the lower position, the O-ring defines the closing location.

In an embodiment, the degassing device further comprises a vacuum pump connected to the gas outlet and a porous chamber located within the inner volume of the degasification housing, wherein the branch flow passage branches off part of the main flow into the porous chamber and the return flow passage extends between the porous chamber and the main flow channel. The porous chamber may comprise a porous element that is permeable to gases and impermeable to the liquid.

By using the combination of the vacuum pump and the porous chamber, the gas outlet does not need to be closed off by a floater, because the vacuum pump functions as a non-return valve for the separated gases. Also, because the porous element is impermeable to the liquid, there is little risk of the liquid reaching the vacuum pump, which would be detrimental to its operation.

In an embodiment, the main flow channel is constricted between the first side and the second side. Such a constriction may increase the pressure near the branch flow passage, forcing a portion of the main flow into the degasification housing. The main flow channel may also comprise a branch flow separator protruding into the main flow channel configured to branch off a portion of the main flow into the degasification zone. The main flow channel may also comprise a main flow valve configured to branch off a portion of the main flow into the degasification zone.

In an embodiment, the constriction comprises a non-return valve.

In an embodiment, the degassing device further comprises a biased switch wherein in the first piston actuator position, the piston actuator engages the biased switch and in the second actuator position, the switch is disengaged.

When the piston actuator is operated to move the piston to the low pressure position, a maximum underpressure risks to be exceeded. When this is about to happen, the low pressure pulls the piston, and therewith the piston actuator, away from the switch towards the second actuator position, disengaging the switch. The disengagement of the switch may deactivate the operation of the piston actuator, inhibiting a further reduction of pressure.

In an embodiment, the degasification housing comprises a first and a second abutment. Herein, the piston is extended against the first abutment to move the piston actuator into the first actuator position, and the piston is retracted against the second abutment to move the piston into the second actuator position.

In an embodiment, the degassing device also comprises a direction switch that is configured to operate the piston actuator in a first direction in a first switch position and to operate the piston actuator in a second direction in a second switch position. Herein, the movement from the first actuator position to the second actuator position moves the direction switch from the first switch position to the second switch position and vice versa.

In doing so, a system is obtained that is able to continuously operate without the need of complex control systems. When the piston has reached an abutment, the piston actuator direction automatically changes, moving the piston to another abutment, and so on.

In an embodiment, the direction switch comprises a delay component, wherein the delay component is configured to delay the operation of the piston actuator after the switch position is changed.

In doing so, an idle time period is created wherein the piston does not move and wherein liquid can flow into the degasification zone or wherein the liquid in the degasification zone is at rest. This may increase the performance of the system.

In an embodiment, the degassing device further comprises at least one sensor and a control unit configured to read out the at least one sensor and/or to control the pressure reduction device. In doing so, the pressure inside the degasification housing can be monitored and controlled if necessary.

In an embodiment, a first pressure sensor is located in the main flow channel and a second pressure sensor is located in the degasification zone. The control unit may then be configured to operate the pressure reduction device as a function of an output of the first pressure sensor and/or the second pressure sensor. By measuring the pressure both in the main flow channel and in the degasification zone, the pressure difference between the two can be determined.

In an embodiment, the pressure reduction device comprises the sensor configured to measure a pressure in the degasification zone.

In an embodiment, at least one sensor is a strain gauge or a stress gauge. By connecting the strain gauge or stress gauge to the piston or piston actuator, the force acting on the piston or piston actuator can be determined and can be used to determine the pressure in the degasification housing. The control unit can determine a pressure in the degasification zone.

In an embodiment, at least one sensor is a current measurement device configured to determine the current necessary to move the piston. By determining the current needed to move the piston, the pressure inside the degasification housing may also be determined as a function of the force necessary to move the piston.

In an embodiment, the degassing device further comprises a temperature sensor. The temperature sensor may be located in the main flow channel. The temperature sensor measures a temperature of the liquid in the main flow channel and the control unit reads out the temperature sensor and controls the pressure reduction device.

In an embodiment, the control unit comprises:
- a first test module configured for determining the presence of a leak, the first test module being configured to:
   ∘ close the at least one valve,
   ∘ subsequently operate the pressure reduction device to reduce or increase the pressure, and
   ∘ subsequently read out the at least one pressure sensor,
   ∘ after a period of time read out the at least one pressure sensor a second time and
   ∘ compare the second measured pressure with the first measured pressure to determine a difference, wherein a difference signal is generated,
   and/or
- a second test module configured for determining the presence of flow in the main flow channel, the second test module being configured to:
   ∘ read out the at least one pressure sensor,
   ∘ subsequently close the at least one valve,
   ∘ after a period of time read out the at least one pressure sensor a second time, and
   ∘ compare the second measured pressure with the first measured pressure to determine a difference, wherein when the difference is smaller than a threshold value, a difference signal is generated indicative of a lack of flow.

By using such a first and/or second test module, the degassing device can be tested in order to keep it operating well and to be able to perform maintenance in time.

In an embodiment, the first test module is configured to maintain the pressure in the degasification zone constant or substantially constant over a test time period by measuring the pressure in the degasification zone, comparing the measured pressure to a target pressure and operating the pressure reduction device to maintain the pressure in the degasification zone at the target pressure. Herein, the first test module measures an operating parameter of the pressure reduction device in time and it is configured to generate a difference signal indicative of a leak when the measured operating parameter exceeds a predetermined threshold value. The operating parameter is in particular the position of a piston and/or a power consumption of the pressure reduction device.

Alternatively or additionally, the first test module is configured to maintain a position of the piston constant or substantially constant over a test time period. Herein, said first test module measures the pressure in the degasification zone over a test time period and is configured to generate a difference signal indicative of a leak when a measured pressure difference over time exceeds a predetermined threshold value.

In an embodiment, the first and/or second test module determines the difference and
- when the difference is larger than the threshold value, the control unit periodically carries out a degassing cycle, and
- when the difference is smaller than the threshold value, the control unit does not carry out any degassing cycle.

By being able to determine whether or not a flow is present in the main flow channel, the degassing device can be operated only when it is useful to do so. This reduces potential wear and reduces the amount of energy consumed.

In an embodiment, the main flow channel is defined by a cup comprising an inlet and an outlet and a lid from which a plate protrudes downwards. The plate divides the cup in an inlet side and an outlet side and allows fluid communication from the inlet side to the outlet side only through the constriction. The lid also separates the main flow channel from the degasification zone and comprises at least one valve located in at least one flow passage. The degasification housing comprises a hood that is placed on top of the lid.

In an embodiment, the degasification zone is connected to the pressure reduction device via a pipe, and/or the degasification zone and/or the pressure reduction device are connected to the main flow channel via a pipe. In doing so, various geometric configurations can be obtained to fit the degassing device in various spaces.

In an embodiment, the outlet closing body is a non-return valve, and the non-return valve is preferably actuated by an actuator, more preferably by the actuator end of the piston.

Another aspect of the invention relates to a method for degassing a gas-containing liquid in a cooling or heating installation by using a degassing device according to the invention,
wherein the method comprises the steps:
a) branching off a portion of the main flow through the at least one flow passage,
b) moving the at least one valve to the respective closed position, respectively obstructing the at least one flow passage, closing off the degasification zone from the main flow channel, and closing the gas outlet,
c) operating the pressure reduction device to lower the pressure in the degasification zone relative to the pressure in the main flow channel,
d) opening the at least one valve and the gas outlet,
wherein the degassing cycle comprises a pressure reduction step comprising steps a), b), and c), and comprises a gas expulsion step comprising step d), wherein,
- during the pressure reduction step, the gas outlet and the at least one valve are closed, wherein the pressure reduction device is configured to degas the gas-containing liquid by reducing the pressure, wherein at a start of the pressure reduction step, a liquid level in the degassing device is at the overflow threshold level and the outlet closing body closes off the outlet tube at the closing location,
- during the gas expulsion step, the pressure in the degasification zone is increased and separated gas is passed through the outlet tube and the gas outlet opening.

The method has the same advantages as the device according to the invention. In step d), the outlet closing body no longer closes the outlet tube. The separated gas travels through the outlet tube, through the floater chamber and is expelled.

In an embodiment, the outlet closing body closes off the outlet tube at a closing location and the predetermined liquid level is located above the closing location. This reduces the compressibility of the mediums in the degasification zone and improves the degasification of the liquid.

In an embodiment, the degassing device comprises two flow passages, a first flow passage being a branch flow passage, and a second flow passage being a return flow passage.

In an embodiment, the pressure reduction device is connected to the degasification housing and wherein the pressure reduction device comprises a piston, a cylinder, and a piston actuator. Herein, the cylinder may be in open communication with the inner volume, and during step c) the piston is moved between an extended position and a retracted position. wherein the degasification zone is delimited by the degasification housing and the piston.

In the retracted position of the piston the degasification zone extends into the cylinder and is larger than in the extended position of the piston. Herein, the degasification zone is delimited by the degasification housing, and at least part of an outer surface of the piston and/or by at least a part of the inner surface of the cylinder.

By moving the piston from the extended position to the retracted position, the degasification zone is pulled into the cylinder and becomes larger than in the idle pressure position of the housing. Because the volume of the degasification zone increases while the content of the degasification zone, i.e. the amount of liquid inside the degasification zone, remains substantially the same, the pressure to which the liquid in the degasification zone is subjected is reduced. The reduced pressure causes the liquid to degas.

In an embodiment, the degasification zone is enlarged into the cylinder when the piston is moved from the extended position to the retracted position and the degasification zone is larger in the retracted position than in the extended position. Alternatively, the degasification zone is enlarged into the cylinder when the piston is moved from the retracted position to the extended position and the degasification zone is larger in the extended position than in the retracted position.

In the first case, the piston actuator will pull on the piston to move the piston to the low pressure position and in the second case, the piston actuator will push of the piston to move the piston to the low pressure position.

In an embodiment, the branch flow passage extends through the cylinder between the main flow channel and the degasification zone and wherein step b) and step c) occur substantially simultaneous and wherein the moving of the piston moves at least one of the first valve, the second valve to the closed position, and/or closes the gas outlet.

In an embodiment, the piston comprises an actuator end and the first valve is a non-return valve. When the piston is moved to the extended position, the actuator end moves the first valve to the open position, and when the piston is moved to the retracted position, the valve is allowed to move to the closed position.

In an embodiment, the outlet closing body comprises a floater and when a liquid level is lower than a first predetermined level, the floater is moved to a lower position, closing off the outlet tube.

In an embodiment, the gas outlet further defines a gas outlet opening and wherein when a liquid level is at a second predetermined level, the outlet closing body is moved to an upper position, closing off the gas outlet opening.

In an embodiment, the gas outlet further comprises a overflow valve and when a liquid level is at the second predetermined level, the overflow valve closes off the gas outlet opening.

In an embodiment, the floater comprises a protrusion, and an outer dimension of the protrusion substantially matches an inner dimension of the outlet tube and wherein during step b) the protrusion is forced into the outlet tube.

In an embodiment, the floater comprises a backflow preventer. The backflow preventer preventing gas to flow into the degasification zone when an outside pressure is larger than a pressure inside the degasification housing. In particular, the backflow preventer preventing gas to flow into the degasification zone during step c).

In an embodiment, the floater comprises a second protrusion, and an outer dimension of the second protrusion substantially matches an inner dimension of the gas outlet opening and wherein when the liquid level is at the second predetermined level, the protrusion is forced into the outlet tube.

In an embodiment, the main flow channel is constricted between the first side and the second side and the constriction increases pressure near the branch flow passage and forces at least a portion of the main flow into the degasification housing. The main flow channel may also comprise a branch flow separator that branches off at least a portion of the main flow into the degasification zone. The main flow channel may also comprise a main flow valve configured to branch off a portion of the main flow into the degasification zone. In doing so, the renewal of liquid in the degasification zone may be increased.

In an embodiment, prior to step d), the pressure in the degasification zone is increased to substantially the pressure present during step a). This reduces pressure differences between the main flow channel and the degasification housing, and/or pressure differences between the outside and the degasification housing. This facilitates the operation of the gas outlet and the valve configured to close off the branch flow passage and the valve configured to close off the return flow passage.

In an embodiment, the degassing device further comprises a biased switch and the piston actuator is fixed to the degasification housing via one or more resilient members and the piston actuator is resiliently moveable between a first actuator position and a second actuator position. When a force necessary to move the piston to the retracted position exceeds a predetermined value corresponding to a minimum pressure inside the degasification housing, the force moves the actuator from the first actuator position engaging the biased switch to the second actuator position disengaging the switch, wherein the disengagement of the switch interrupts the operation of the pressure difference device. In doing so, for example, a predetermined minimum pressure or maximum underpressure can be ensured to remain above the vapour line of the liquid, preventing the liquid from boiling.

In an embodiment, the degasification housing further comprises a first and a second abutment and the piston actuator is fixed to the degasification housing via one or more resilient members and the piston actuator is resiliently moveable between a first actuator position and a second actuator position. Herein, when the piston extends against the first abutment the piston actuator moves into the first actuator position, and when the piston retracts against the second abutment the piston moves into the second actuator position.

In an embodiment, the degassing device also comprises a direction switch that operates the piston actuator in a first direction in a first switch position and operates the piston actuator in a second direction in a second switch position. Herein, the movement from the first actuator position to the second actuator position moves the direction switch from the first switch position to the second switch position and vice versa.

In doing so, a system is obtained that is able to continuously operate without the need of complex control systems. When the piston has reached an abutment, the piston actuator direction automatically changes, moving the piston to another abutment, and so on.

In an embodiment, the direction switch comprises a delay component. Herein, the delay component delays the operation of the piston actuator when the switch position is changed.

In doing so, an idle time period is created wherein the piston does not move and wherein liquid can flow into the degasification zone or wherein the liquid in the degasification zone is at rest. This may increase the performance of the system.

In an embodiment, wherein the degassing device further comprises at least one sensor and a control unit, wherein the control unit reads out the at least one sensor and/or controls the pressure reduction device. In doing so, the pressure inside the degasification housing can be monitored and controlled if necessary.

In an embodiment, the sensor is a force sensor connected to the piston actuator and the degasification housing, wherein the sensor measure a force acting on the piston actuator in a direction substantially parallel to a central axis of the cylinder. By connecting the force sensor to the piston actuator, the force acting on the piston actuator can be determined and can be used to determine the pressure in the degasification housing.

In an embodiment, a first pressure sensor is located in the main flow channel and wherein a second pressure sensor is located in the degasification zone. Herein, the first and second pressure sensor measure respectively a first and a second pressure.

In an embodiment, the degassing device further comprises a temperature sensor. The temperature sensor may be located in the main flow channel. The temperature sensor measures a temperature of the liquid in the main flow channel and the control unit reads out the temperature sensor and controls the pressure reduction device.

In an embodiment, the control unit further operates at least one of the first valve, the second valve, the main flow valve, and the gas outlet valve.

In an embodiment, the device further comprises a flow switch, wherein when no flow is present in the main flow channel, the flow switch prevents the pressure reduction device from operating. This prevents the device from operating when the liquid in the degasification zone is not refreshed between cycles.

### BRIEF DESCRIPTION OF THE DRAWINGS

Figure 1 depicts an embodiment of the degassing device in an idle state.
Figure 2 depicts an embodiment of the degassing device in a state wherein the pressure reduction device has just started operation.
Figure 3 depicts an embodiment of the degassing device in a low pressure state.
Figure 4 depicts an embodiment of the degassing device after dissolved gas has been separated from the liquid and is being evacuated to outside of the degassing device.
Figure 5 depicts an embodiment comprising a floater chamber, sensors and a control unit in an idle state.
Figure 6 depicts an embodiment comprising a floater chamber, sensors and a control unit in an low pressure state.
Figure 7 depicts an embodiment comprising a floater chamber, sensors and a control unit in an overpressure state.
Figure 8 depicts an embodiment of the degassing device, wherein valves are controlled by the control unit in an idle state.
Figure 9 depicts an embodiment of the degassing device, wherein valves are controlled by the control unit in a low pressure state.
Figure 10 depicts an embodiment of the degassing device, wherein valves are controlled by the control unit in an idle state.
Figure 11 depicts an embodiment of the degassing device, wherein valves are controlled by the control unit in a low pressure state.
Figure 12 depicts an embodiment wherein the piston movement is oriented orthogonally to the main flow channel is an idle state.
Figure 13 depicts an embodiment wherein the piston movement is oriented orthogonally to the main flow channel is a low pressure state.
Figures 14A and 14B depict an embodiment of the piston actuator
Figure 15 depicts an embodiment of the degassing device comprising a porous chamber and a vacuum pump.
Figure 16 depicts an embodiment with one flow passage, wherein the degassing device is in an idle pressure position.
Figure 17 depicts an embodiment with one flow passage, wherein the degassing device is in a low pressure position.
Figure 18 depicts an embodiment comprising a test module and open valves.
Figure 19 depicts an embodiment comprising a test module and with one closed valve.
Figure 20 depicts an embodiment comprising a test module and with two closed valves.
Figure 21 depicts an embodiment where no flow is present.
Figures 22A, 22B, 22C, and 22D depict pressure as a function of pressure reduction device operation and time.
Figures 23A and 23B depict pressure as a function of pressure reduction device operation and time respectively.
Figures 24A and 24B depict pressure as a function of pressure reduction device operation and time respectively.
Figures 25A and 25B depict an embodiment of the degassing device comprising a cup and a hood.
Figures 26A and 26B depict an embodiment of the degassing device comprising a cup and a hood.
Figures 27A and 27B depict an embodiment comprising a direction switch and pipes.
Figures 28A and 28B depict a close up of a pressure reduction device in two positions.
Figures 29A and 29B depict embodiments comprising a flow switch located in different positions.
Figures 30A and 30B depict an embodiment comprising an actuator end.

### DETAILED DESCRIPTION OF THE DRAWINGS

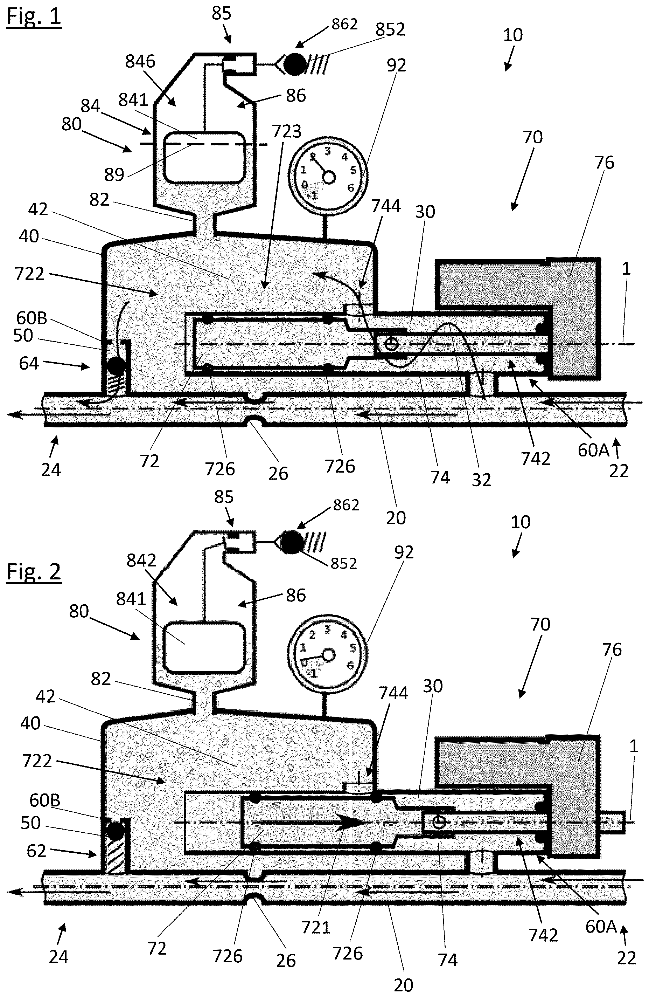

Turning to figures 1-4, a cross section of an embodiment of a degassing device 10 is depicted. The figures depict the degassing cycle wherein an amount of liquid is separated from the main flow channel, the liquid is degassed via a pressure reduction, the gas is expelled, and the liquid is communicated with the main flow channel. After this cycle is completed, a new cycle starts. The degassing device 10 is connected to a liquid circuit of a cooling or heating installation (not depicted) wherein a liquid of the cooling or heating installation enters the degassing device 10 on a first side 22 and exits the degassing device on a second side 24. In operation, a main portion of the liquid flow passes through a main flow channel 20 and a branch flow is branched off by a branch flow passage 30. After being branched off, the flow passes through the branch flow passage into a degasification zone 42 where the liquid will be degassed. The degasification zone 42 substantially corresponds to an inner volume of a degasification housing 40. In an idle state of the degassing device, the liquid first passes through the branch flow passage 30 and the degasification zone 42, after which the liquid joins the main flow via a return flow passage 50 extending between the degasification zone and the main flow channel.

A pressure reduction device 70 is connected to the degasification housing 40 and is configured to lower the pressure in the degasification zone 42 relative to the pressure in the main flow channel. The pressure can be measured with a sensor 92, in particular with a manometer.

In order to be able to degas the liquid in the degasification zone, the degasification housing must be closed off from the outside, i.e. from the atmosphere outside the degassing device and from the main flow channel. To do so, a valve 60B is present that is moveable between a closed position 62B and an open position 64B. In the closed position the valve obstructs the return flow passage 50 and closes off the degasification zone from the main flow channel. Another valve 60A is present and is configured to be moved between a closed position 62B and an open position 64B and obstructs the branch flow passage in the closed position, closing off the degasification zone 42 from the main flow channel 20.

After the degassing of the liquid has taken place, the separate gas must be evacuated from the device. To this end, a gas outlet 80 is present in the degasification housing and comprises an outlet tube 82 and an outlet closing body 84.

In the depicted embodiment, the pressure reduction device 70 comprises a piston 72, a cylinder 74 and a piston actuator 76. The piston actuator 76 is configured to move the piston 72 between an extended, idle pressure position 722 and a retracted, low pressure position 724. Because the cylinder is in open communication with the degasification zone 42 and the degasification zone 42 extends into the cylinder and is larger in the retracted position 725 than in the extended position 723 of the piston, the movement of the piston from the extended position 722 to the retracted position 724 reduces the pressure inside the degasification zone 42; the closed off degasification zone grows in size whilst the amount of matter inside it remains substantially the same. The degasification zone 42 is delimited by the degasification housing 40, a part of the outer surface of the piston 72, and a part of the inner surface of the cylinder 74. It will be understood that if the piston actuator would be located on an opposite side of the piston 72 along the direction of movement of the piston, the low pressure position would correspond to an extended position and the idle pressure position would correspond to a retracted position because the piston actuator would push instead of pull. The piston actuator 76 may be one of an electric actuator, a pneumatic actuator, and a hydraulic actuator. The depicted piston movement is a linear movement.

In order to increase the size of degasification zone, the piston 72 comprises two seals 726 in the form of O-rings that enable the piston to move within the cylinder and keep a substantially liquid-tight connection between the piston and the cylinder 74.

In figures 1-4, the pressure reduction device is located in a lower part of the degasification housing and is configured to be operate below a liquid level in the degasification housing. This, together with the substantially parallel direction 1 of the piston movement, enables the degassing device to be compact and to not take in a lot of space far away from the main flow channel.

It can further be seen that the branch flow passage 30 extends through the cylinder 74 between the main flow channel 20 and the degasification zone 42. In figure 1, a branch flow path 32 is depicted extending from the main flow channel through a cavity 742 in the cylinder and entering the inner volume of the degasification housing 40 through a branch flow hole 744 defined by the cylinder. Further, the valve 60A is integrated in the pressure reduction device; the piston 72 is a part that is moveable into the low pressure position and there obstructs the branch flow passage. In doing so, the piston movement is configured to move the valve 60A to the closed state when it moves from the idle pressure position to the low pressure position.

Looking at an upper region of the degassing device 10, the gas outlet 80 is depicted comprising a floater chamber 86 and the outlet closing body 84 comprises a floater that, in figures 1 floats on the liquid at an upper position 846 and in figure 2 floats on the liquid at a floating position 842. The floater is connected to a overflow valve 85 wherein, when the liquid level rises to a certain level (called the overflow threshold level 89), the floater closes off the overflow valve 85, as a result of which a further rise of the liquid level is prevented (depicted in figure 1). Alternatively, when the liquid level is lower, the floater does not close off the overflow valve (as depicted in figure 2).

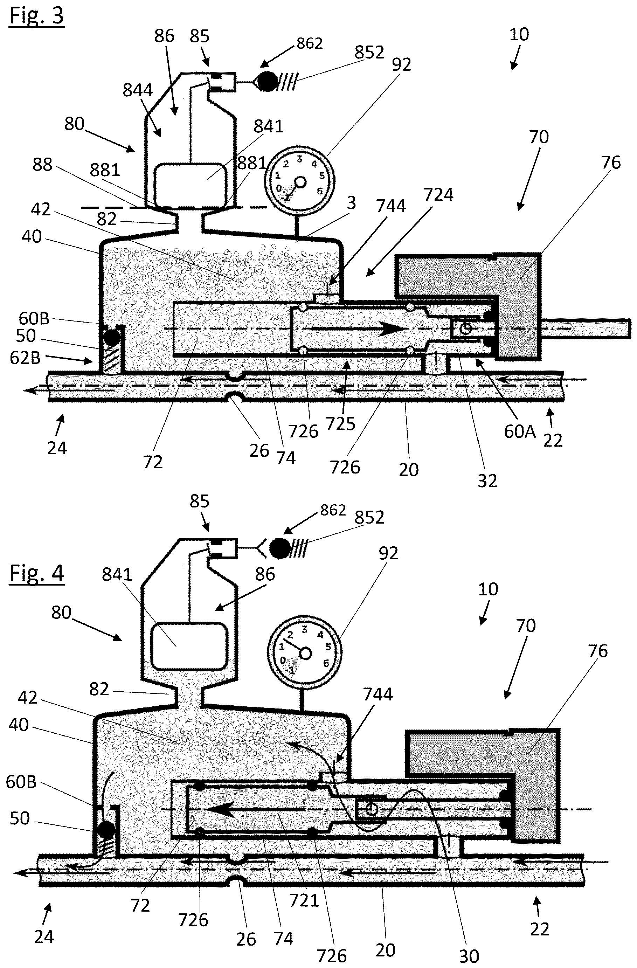

When the pressure reduction device is operated, the liquid level is at the overflow threshold level 89 which may be about halfway the floater chamber. This is the maximum liquid level which is allowed by the floater. If the liquid level rises above this level, the floater closes the overflow valve 85. When the pressure reduction device starts to operate the liquid level drops due to the increase in volume of the degasification zone. The floater 841 then moves to a lower position 844 (depicted in figure 3) where it engages the outlet tube 82, this occurs when the liquid level is lower than a first predetermined liquid level 88. Here, the outlet closing body closes off the outlet tube. A closing location 881 is then created at the points of engagement. The engagement disconnects an air pocket located in the gas outlet above the closing location from the degasification zone. Because the closing location 881 is under the liquid level, little or no air is present in the degasification zone. Hence the overall compressibility of the liquid in the degasification zone is reduced, leading to better performance of the degassing process.

In order to seal off the gas outlet, a backflow preventer 852 is present. The backflow preventer prevents gas from the outside to flow into the degasification housing when the outside pressure is greater than the pressure inside the degasification housing. In figure 4, when the pressure inside the housing is increased, the backflow preventer 852 is opened and the free gasses released from the liquid may be evacuated via the gas outlet. In particular, the backflow preventer preventing gas to flow into the degasification zone during a pressure reduction step of a degassing method.

In order to create a flow of liquid into the degasification zone 42, the main flow comprises a constriction 26 located between the first side 22 and the second side 24. By being constricted, the pressure in the main flow is increased near the branch flow passage, forcing a portion of the main flow into the degasification housing.

In operation, a method for degassing a gas-containing liquid in a cooling or heating installation by using a degassing device 10 comprises the steps:
a) branching off a portion of the main flow through the branch flow passage 30,
b) moving the valves 60A, 60B to their respective closed positions 62A, 62B, respectively obstructing the branch flow passage and the return flow passage, closing off the degasification zone from the main flow channel, and closing the gas outlet 80,
c) operating the pressure reduction device to lower the pressure in the degasification zone relative to the pressure in the main flow channel,
d) opening the first valve, the second valve, and the gas outlet,
wherein during step c) gas dissolved in the liquid is separated from the liquid and wherein during and/or after step d) liquid in the degasification housing is returned to the main flow channel through the return flow passage and the separated gas is expelled through the gas outlet.

The abovementioned step b) can be performed by operating the pressure reduction device in the depicted embodiment. In figure 2, the movement 721 of the piston 72 towards the low pressure position leads the non-return valve 60B and the valve 60A for the branch flow passage 30 to close and the decreasing liquid level below a first predetermined level 88 leads the floater to close off the gas outlet tube 82. When the valves 60A, 60B and the gas outlet 80 are closed, the operation of the pressure reduction device lowers the pressure in the degasification zone 42. The end of the movement of the piston 72 in the cylinder 74 by the piston actuator 76 towards the retracted position 724 from the extended position 722 is depicted in figure 3. Here above the liquid in the degasification zone 42, free gas 3 has formed by separating from the liquid. As the valves and the gas outlet are opened, the free gas 3 may evacuate the degassing device through the gas outlet and the liquid in the degasification zone 42 may return to the main flow through the return flow passage. As a result the liquid level will rise to the overflow threshold level 89 again.

In the depicted embodiment, prior to step d), the pressure in the degasification zone is increased to substantially the pressure present during step a). this facilitates the disengagement of the floater from the outlet tube with the result that the outlet tube is reopened, and the opening of the valves.

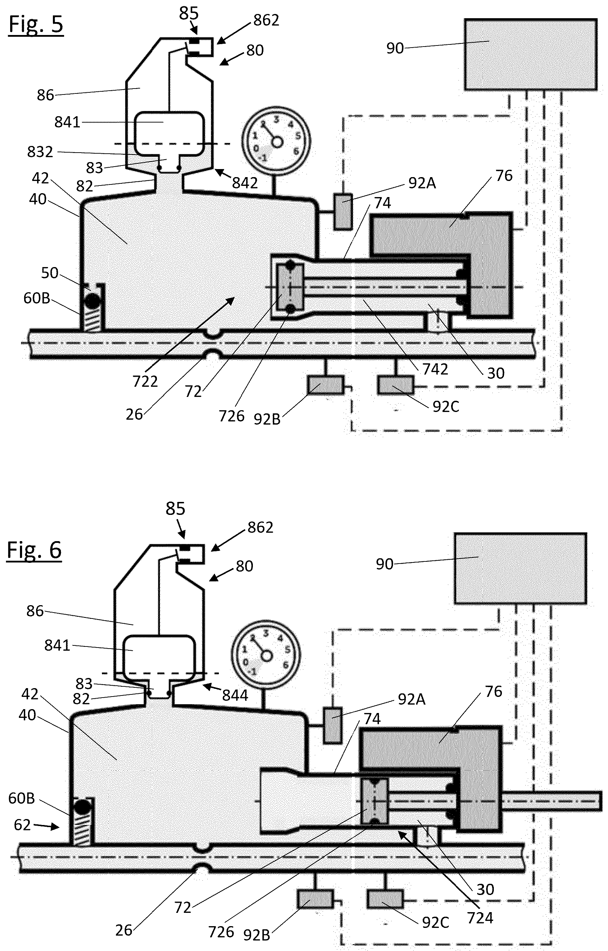

Turning to figures 5-7, the floater chamber 86 of the gas outlet 80 defines a gas outlet opening 862 through which free gas may be evacuated. In this embodiment the floater 841 itself comprises a protrusion 83 respectively located on a lower side 832 of the floater. The protrusion 83 located on the lower side 832 of the floater has an outer dimension that substantially matches an inner dimension of the outlet tube 82. In doing so the closing of the degasification zone from the outside can be improved because, in operation during step b), the protrusion 83 is forced in the outlet tube 82. By closing the outlet tube directly when the liquid levels drops sufficiently, the amount of free gasses in the degasification zone is reduced, enabling a faster pressure reduction. Because the protrusion seals the outlet tube, the backflow preventer does not need to be present. However, the protrusion and the backflow preventer may also be combined.

The floater is configured to actuate the overflow valve 85; when a liquid level is at an overflow threshold level (also second predetermined level) 89, the floater 841 is moved to an upper position 846 where it closes the overflow valve, closing off the gas outlet opening. This occurs when too much liquid starts to accumulate inside the degasification zone and the device is at risk of overflowing; the floater 841 together with the floater chamber 86 prevents the overflowing from happening. Herein, the pressure inside the degasification housing is at an overpressure with respect to the outside. This pressure may be equal to a system pressure, i.e. the pressure in the main flow channel.

To improve the closing, the protrusion comprises an O-ring or a double lip seal to even better seal the gas outlet opening 862 and the gas outlet tube 82. The O-ring or double lip seal defines the closing location.

Further, the cylinder 74 comprises a flared end wherein the branch flow passage extends between the piston 72 and the cylinder 74 when the piston is in the idle pressure position 722.

The degassing device also comprises three sensors 92A, 92B, 92C and a control unit 90 that is configured to read out the sensors and to control the piston actuator 76. By measuring the pressure in the degasification zone with sensor 92A and the pressure in the main flow channel 20 with sensor 92B, a pressure difference can be determined by the control unit 90 and the piston actuator 76 can be operated as a function of these measurements. Also, the temperature of the liquid can be determined using a temperature sensor 92C. By determining the temperature of the liquid a pressure at which the liquid starts boiling can be determined and avoided. The temperature sensor may also measure a temperature of the liquid in the main flow channel and the control unit reads out the temperature sensor and can subsequently control the pressure reduction device.

Besides using separate sensors 92A, 92B, 92C to determine the state of the degassing device and more particularly the pressure in the degasification zone 42, the control unit 90 may also be configured to measure the current necessary to move the piston 72. Based on the current, the force acting on the piston can be determined which gives a measure for the pressure in the degasification zone 42.

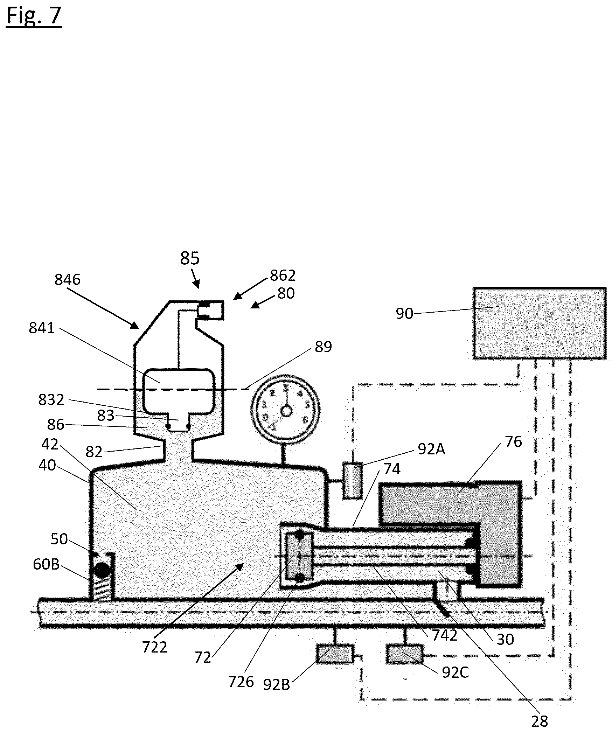

In figure 7, an embodiment of the invention is depicted wherein the main flow channel doesn't comprise a constriction, but comprises a branch flow separator 28 protruding into the main flow channel. The branch flow separator is configured to branch off a portion of the main flow into the degasification zone

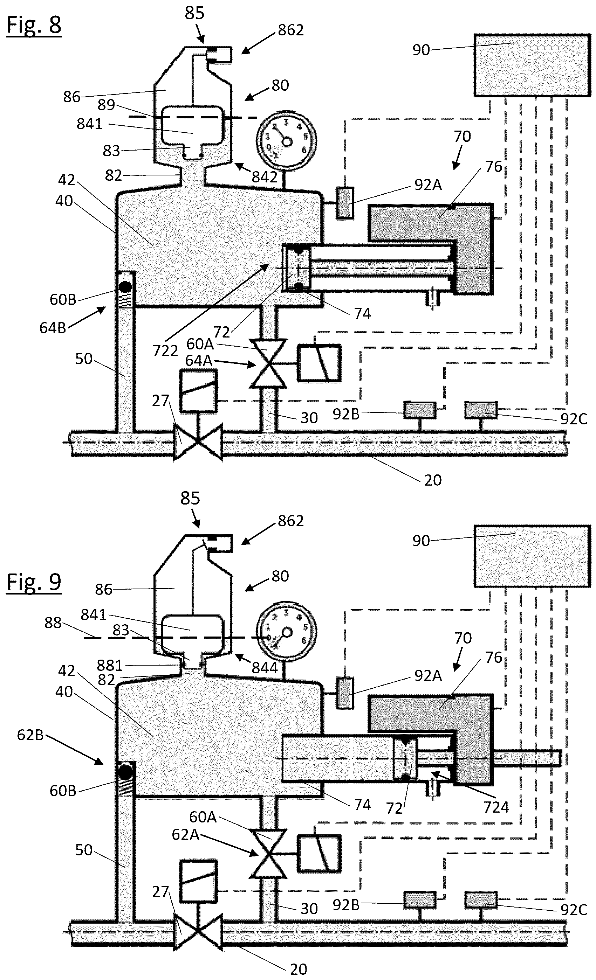

Moving to figure 8 and figure 9, an embodiment is shown where the pressure reduction device 70 is not integrated with the valve 60A that closes of the branch flow passage 30. Instead, the branch flow passage can be closed off by an actuated valve 60A that may be moved from the open position 64A to the closed position 62A by the control unit 90. Similarly, the control unit 90 may also control a main flow valve 27 that is configured to temporarily close off the main flow channel 20 to branch off liquid into the degasification housing.

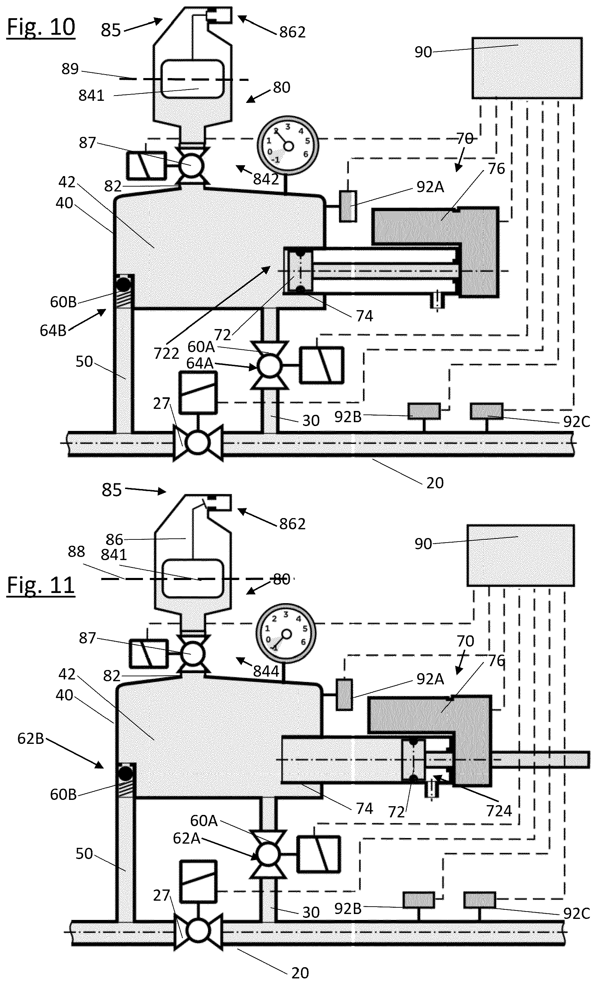

The embodiment depicted in figures 10 and 11 is largely similar to the embodiment depicted in figures 8 and 9. The main difference lies in the outlet closing body comprising a gas outlet valve 87, in particular a ball valve, that may be controlled by the control unit 90. The gas outlet valve allows gas and/or liquid to flow between the outside and the degasification zone in an open position and closes off the degasification zone in a closed position. Soon after the start of the degassing cycle and of the operation of the pressure reduction device 70, the gas outlet valve is closed. At this time, the liquid level is at the overflow threshold level and the outlet valve 87 is submerged. Because the outlet valve 87 is submerged at the start of the pressure reduction step, the entire degasification zone 42 is filled with liquid and the degassing of the liquid can be performed more efficiently than if more liquid and/or more gas would initially be present in the inner volume.

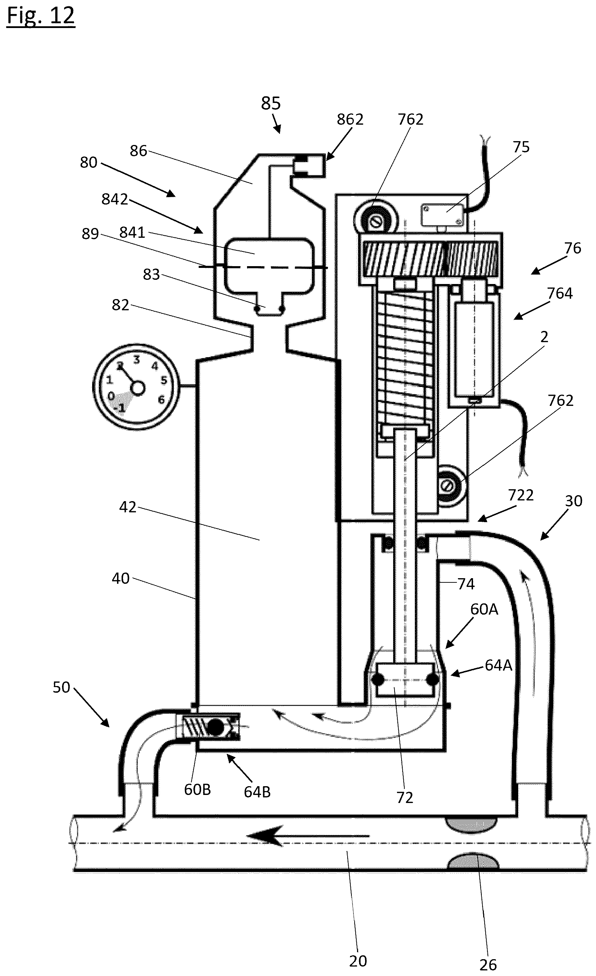

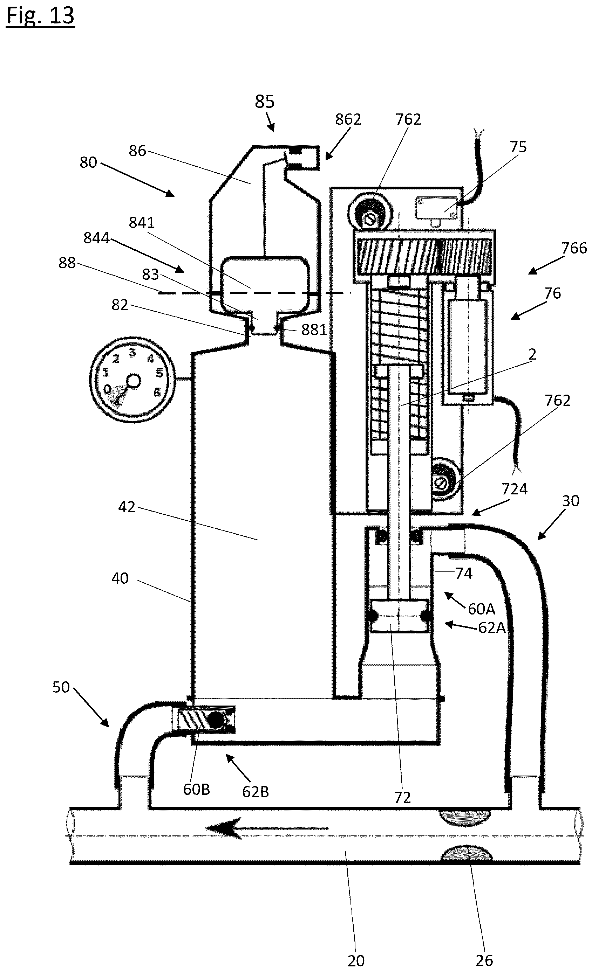

Turning to figures 12 and 13, an embodiment is depicted wherein the piston is moveable in a direction 2 that is substantially orthogonal to the main flow channel. By orienting the pressure reduction device 70 in this manner, the degassing device takes up less lateral space and may be used in narrow spaces. Herein, the cylinder 74 comprises a flared end wherein the branch flow passage extends between the piston 72 and the cylinder 74 when the piston is in the idle pressure position 722.

Further, the piston actuator 76 is fixed to the housing via two resilient member 762. Besides damping vibrations, the resilient members allow the piston actuator 76 to resiliently move between a first actuator position 764 and a second actuator position 766. In figure 10, the piston actuator is shown in the first actuator position 764 where it engages a biased switch 75 located above the piston actuator. When the pressure reduction device is operated and the pressure inside the degasification zone 42 is reduced, the piston will be pulled away from the switch together with the piston actuator 76. When a predetermined minimum pressure is achieved, e.g. a pressure just above the vapour line of the liquid, the piston actuator moves to the second actuator position 766, disengaging the biased switch 75. Therefore, when in operation, when a force necessary to move the piston to the retracted position 724 exceeds a predetermined value corresponding to a pressure inside the degasification housing, the force moves the piston actuator 76 away from the switch 75, wherein the disengagement of the switch interrupts the operation of the pressure difference device. Besides the mechanical approach using a switch, it will be understood that a stress gauge or a strain gauge in combination with the control unit 90 may achieve the same result; a measured stress or strain value can then be used by the control unit to determine a pressure in the degasification zone.

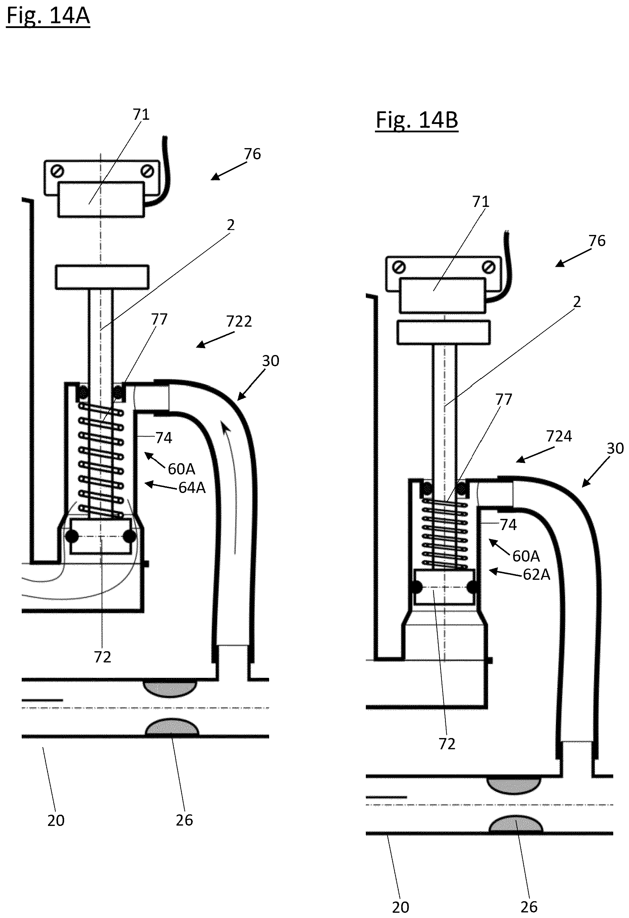

Turning to figures 14A and 14B, an embodiment of a piston actuator 76 is depicted wherein the piston actuator comprises an electromagnet 71 that is configured to attract and/or repulse the piston 72. By attracting the piston 72 in the idle pressure position 722, the piston 72 is moved into the low pressure position 724. In the depicted embodiment, the piston actuator further comprises a spring 77 that is configured to move the piston back to the idle pressure position 722. This action may also be done by a repulsive force of the magnet 71.

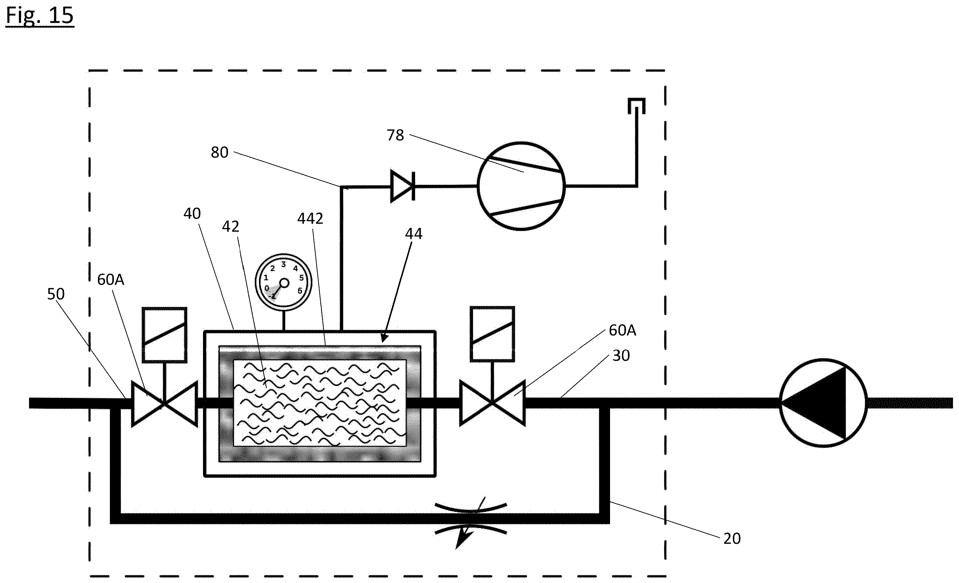

Turning to figure 15, a schematic depiction of an embodiment is shown. Herein the pressure reduction device is a vacuum pump 78 that is connected to the gas outlet 80, wherein the outlet closing body comprises a gas outlet valve 87 and a gas outlet tube 82. Further, the degassing device comprises a porous chamber 44 that is located within the volume of the degasification housing 40.

When a first valve 60A is open, a portion of the main flow is branched off by the branch flow passage 30 and flows into the porous chamber 44. When the first valve 60A and a second valve 60B are closed, the vacuum pump is operated and the pressure inside the degasification housing is reduced. This leads to dissolved gas in the liquid to separate from the liquid and the gas may then be sucked through a porous element 442 of the porous chamber and may be evacuated by the vacuum pump. Because the porous chamber 42 is only permeable to gases and not to the liquid, the liquid remains in the circuit. After the separated gas has been evacuated, the valves 60A, 60B are opened and the liquid returns to the main flow channel via the return flow passage.

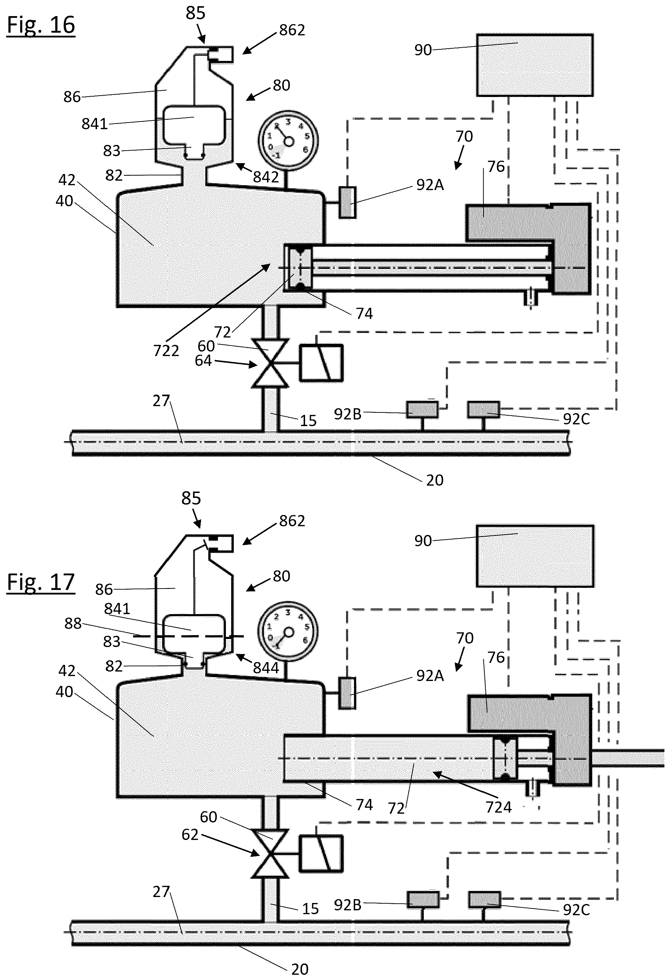

Turning to figures 16 and 17, a similar embodiment to that of figures 8 and 9 is depicted. The main difference being the presence of one flow passage 15 that allows communication between the degasification zone and the main flow channel. In the depicted embodiment, the degasification zone 42 is filled with liquid from the main flow channel 20. Subsequently, at least one valve 60 is moved from an open position 64 to a closed position 62 and the pressure reduction device is operated. Thereafter, when the liquid has been degassed, the valve is moved to the open position 64 and the liquid returns to the main flow channel 20 through the flow passage 15. This occurs at the end of a degassing cycle.. By using a single valve 60, the device can be kept smaller and easier to operate in comparison with a device using multiple valves.

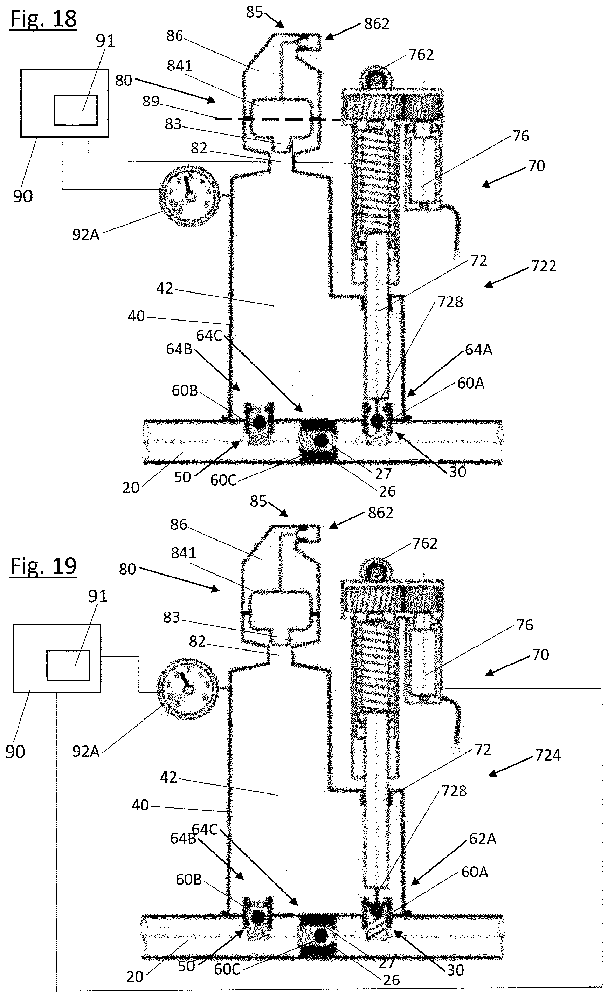

In figures 18, 19, 20, and 21 a similar device to that of figures 12 and 13 is depicted. Here, in the main flow channel 20, the constriction 26 comprises a non-return valve 60C. The first valve 60A and second valve 60B also are non-return valves. To be able to allow the liquid to flow through the first valve 60A, the piston 72 comprises an actuator end 728 that is configured to move the first valve to the open position 64 in the extended state 722 of the piston.

The piston comprises an actuator end 728 and the first valve is a non-return valve. Herein, the actuator end engages the first valve in the open position, wherein the movement of the piston from the retracted state to the extended state moves the first valve from an idle closed position to the open position via the actuator end. The movement of the piston from the extended state to the retracted state moves the first valve from the open position to an idle closed position via the actuator end.

Here, the control unit 90 comprises a first and/or second test module 91 that may be comprise digital or analogue components. The test module is configured for determining the presence of flow in the main flow channel so that a degassing operation is not performed in vain.

In figure 18, the test module reads out the pressure sensor 92A to determine the pressure inside the degasification zone. This pressure is similar to that in the main flow channel because the first, second and third valve 60A, 60B, and 60C are all open. After the test module closes the first valve 60A via the actuator end 728 in figure 19, the flow in the main channel causes a pressure drop in the degasification zone because of the flow that is still flowing out of the second valve 60B.

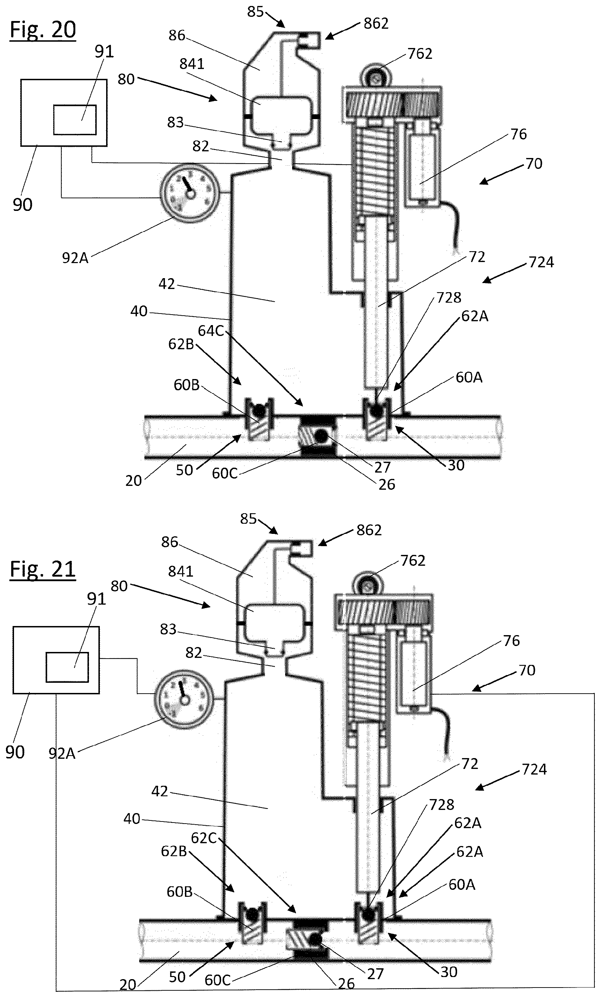

Because of the lower pressure in the degasification zone and the second valve is a non-return valve, the second valve 60B moves to the closed state 62B. This is shown in figure 20. After a period of time, the test module 91 reads out the pressure sensor 90A a second time.

The test module 91 then compares the second measured pressure with the first measured pressure to determine a difference. The difference is compared with a threshold value. Because a flow is present, the difference is larger than the threshold value and no difference signal is generated by the test module.

Turning to figure 21, the same test module has performed the same sequence as in figures 18 and 19. However, because no flow is present in the main flow, no pressure drop has occurred after the closing of the first valve 60A. when the test module compares the second measured pressure with the first measured pressure, the difference is very small. Because the difference is smaller than the threshold value, the test module generates a difference signal indicative of a lack of flow.

Herein, when the difference is larger than the threshold value, the control unit periodically carries out a degassing cycle, and when the difference is smaller than the threshold value, the control unit does not carry out any degassing cycle.

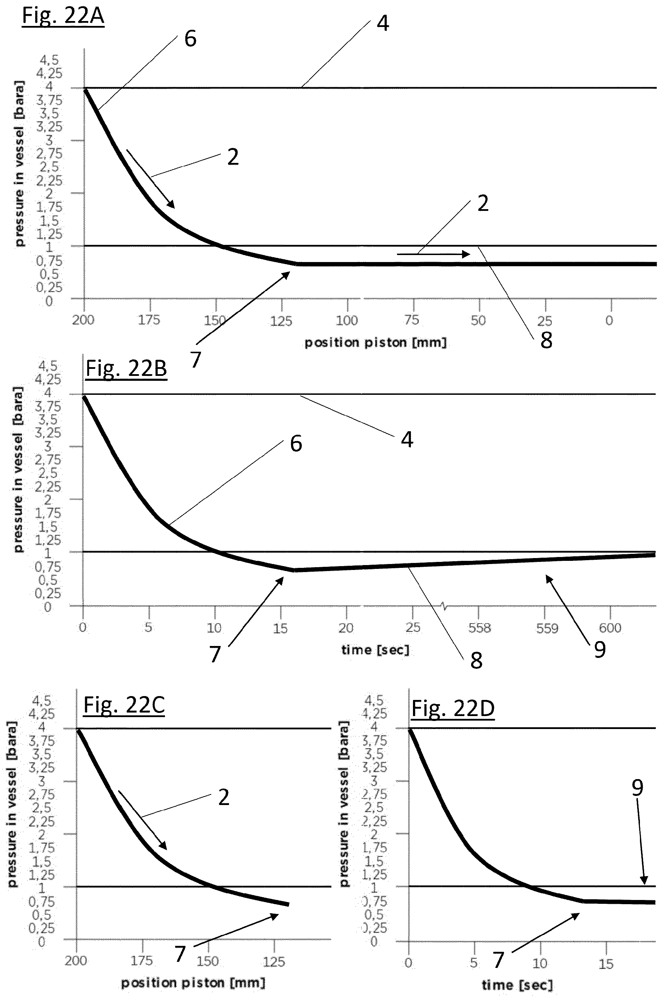

Turning to figures 22A-24B, the consequences of another test module are depicted for different situations. Herein, the test module 91 closes the at least one valve and subsequently operates the pressure reduction device to reduce the pressure. Subsequently, the at least one pressure sensor is read out, and after a period of time, the at least one pressure sensor is read out a second time. The second measured pressure 9 is then compared with the first measured pressure 7 to determine a difference and the test module generates a difference signal. It will be understood that the pressure reduction device can also be used to increase the pressure for the test procedure.

In figures 22A, 23A, and 24A, an additional step is carried out by the test module. Herein, the test module is configured to maintain the pressure in the degasification zone constant or substantially constant over a test time period by measuring the pressure in the degasification zone, comparing the measured pressure to a target pressure and operating the pressure reduction device to maintain the pressure in the degasification zone at the target pressure.

The testing module then measures an operating parameter of the pressure reduction device in time and is configured to generate a difference signal indicative of a leak when the measured operating parameter exceeds a predetermined threshold value, wherein said operating parameter is in particular the movement of a cylinder and/or a power consumption of the pressure reduction device.

In figures 22A and 22B, both graphs show a leakage of air into the degasification housing. In figure 22A, the pressure is reduced to below atmospheric pressure 8 and the first pressure 7 is measured. Thereafter, the piston is moved to the retracted state over time 2. This means that the pressure reduction device is operated to reduce the pressure but that the pressure remains constant. This is only possible is case of a leak from the outside of the degasification housing in. Based on the presence of a leak, a difference signal is generated.

In figure 22C, no leak is present. Here, the pressure is reduced to below atmospheric pressure 8 and the first pressure 7 is measured. Subsequently, the piston does not need to be moved to maintain the first pressure and is kept at a constant position.

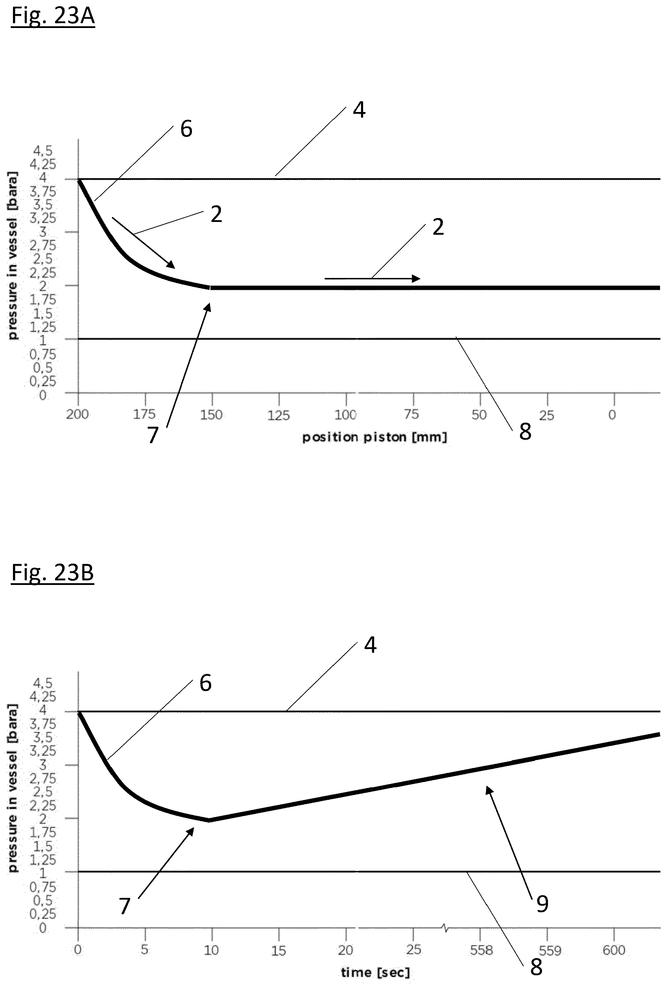

In figure 22B, the pressure reduction device is operated to reduce the pressure to below atmospheric pressure and is subsequently stopped from operating. If no leak is present, the pressure would remain constant over time. However, if a leak is present, the pressure would rise. If the pressure rises to atmospheric pressure and not further, a leak is present from the outside into the degasification zone. Based on the presence of a leak, a difference signal is generated indicative of a leakage of air from outside into the degasification housing. If the pressure rises further to above the atmospheric pressure, a leak is present between the degasification zone and the main flow channel. This is also depicted in figure 23B.

In figure 22D, no leak is present. Here, the pressure is reduced to below atmospheric pressure 8 and the first pressure 7 is measured. Subsequently, time passes and the second pressure 9 is measured. Because the first and second pressures are substantially the same, it can be concluded that no leak is present.

In figure 23A and 23B, both graphs show a leakage from the main flow channel into the degasification zone. In figure 23A, the pressure is reduced to above atmospheric pressure but below the pressure in the main flow channel 4. If the pressure reduction device must be operated to decrease pressure, which is the case, the main flow channel leaks into the degasification zone. Accordingly, a difference signal is generated which is indicative of a leakage from the main flow channel into the degasification housing.

In figure 23B, the same leak is present. First, the pressure is reduced by the operation of the pressure reduction device which is then stopped. If no leak were present, the pressure would remain constant. However, the pressure rises towards the pressure in the main flow channel 4. This indicates a leak from the main flow channel into the degasification zone. Accordingly, a difference signal is generated which is indicative of a leakage from the main flow channel into the degasification housing

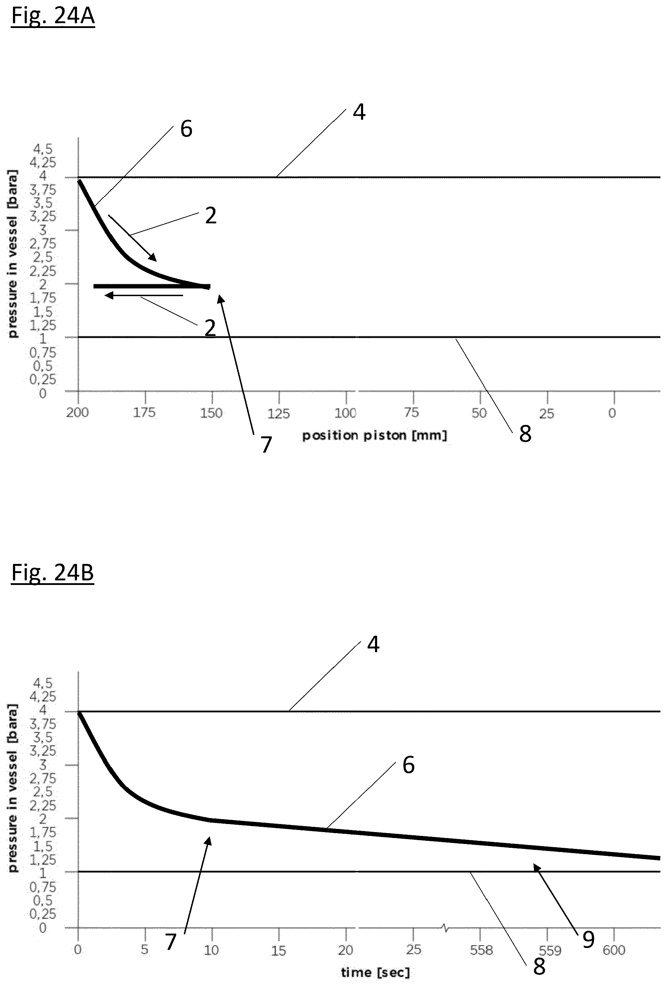

Turning to figures 24A and 24B, both graphs show leakage from the degasification zone to the outside. In figure 24A, the pressure is reduced by the pressure reduction device. If no leak were present, the pressure would remain constant without moving the piston. However, because the liquid is leaking to the outside and because the pressure in the degasification zone 6 is higher than the atmospheric pressure, the pressure reduction device is operated to increase the pressure to keep the pressure constant. This indicates a leak to the outside from the degasification zone. Accordingly. A difference signal is generated which is indicative of a leakage from inside the degasification housing to the outside.

In figure 24B, the pressure is reduced by the pressure reduction device and the pressure reduction device is then stopped. If no leaks were present, the pressure would remain constant. However, because the liquid leaks to the outside from within the degasification zone, the pressure in the degasification zone 6 decrease over time towards the atmospheric pressure.

It will be understood that each test module can be used after the other and that the testing can also be done prior to performing a degassing method. Also, it will be understood that the methods can be performed periodically for the maintenance of the degassing device.

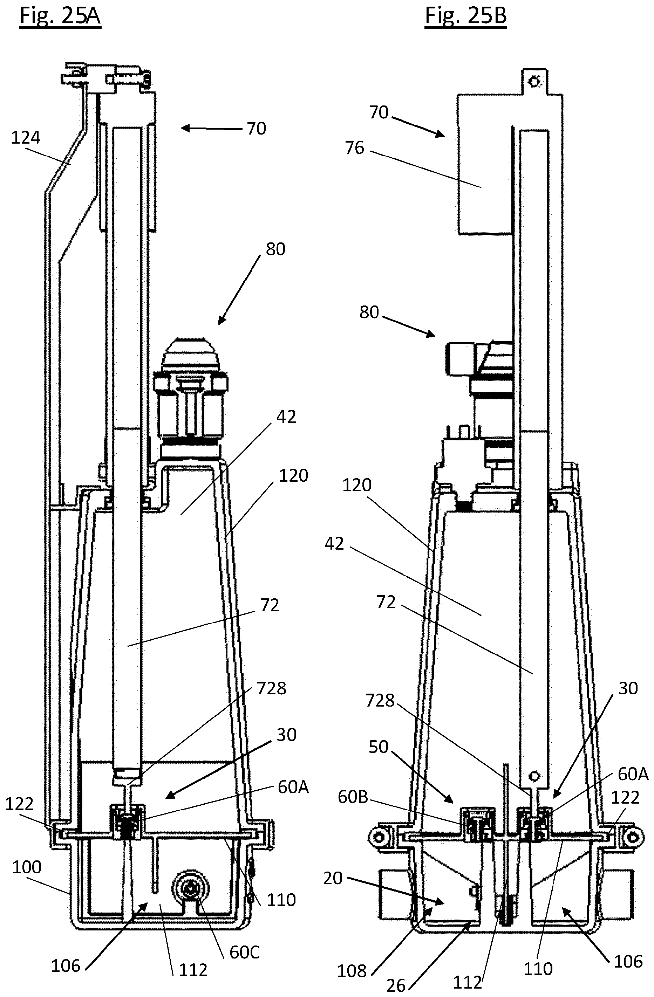

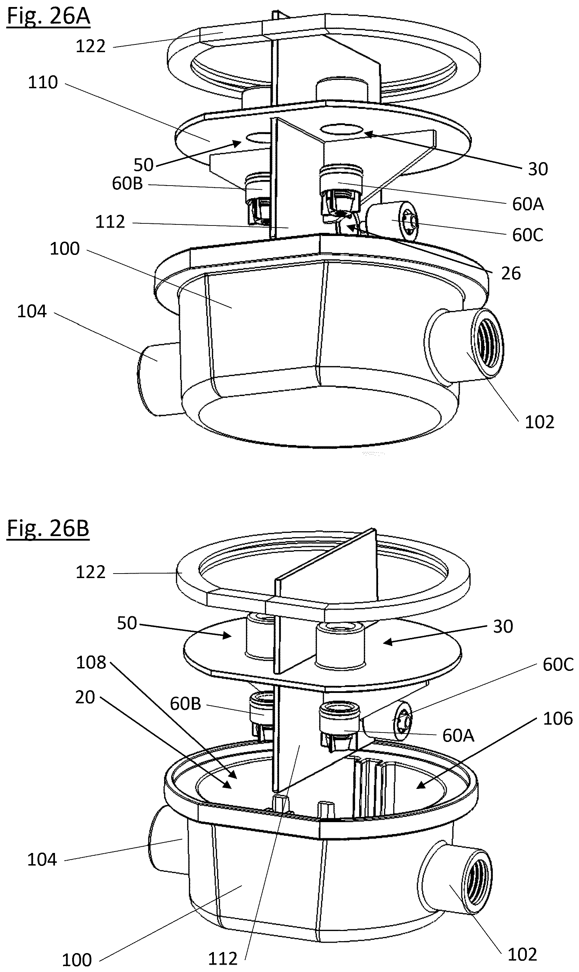

Turning to figure 25A, 25B, 26A, and 26B, the main flow channel 20 is defined by a cup 100 comprising an inlet 102 and an outlet 104 and a lid 110 from which a plate 112 protrudes downwards, wherein the plate divides the cup in an inlet side 106 and an outlet side 108 and allows fluid communication from the inlet side to the outlet side only through the constriction 26. The lid 110 separates the main flow channel 20 from the degasification zone 42 and comprises two valves 60A and 60B respectively located in a branch flow passage and a return flow passage. The degasification housing comprises a hood 120 that is placed on top of the lid. To prevent leaks between the lid, hood, and cup, a seal 122 is present. Further, a mounting bracket 124 is present to which the cup 100, the hood 120, and the pressure reduction device 70 are connected. Such a mounting bracket may be used to mount the degassing device to a wall or other structure.

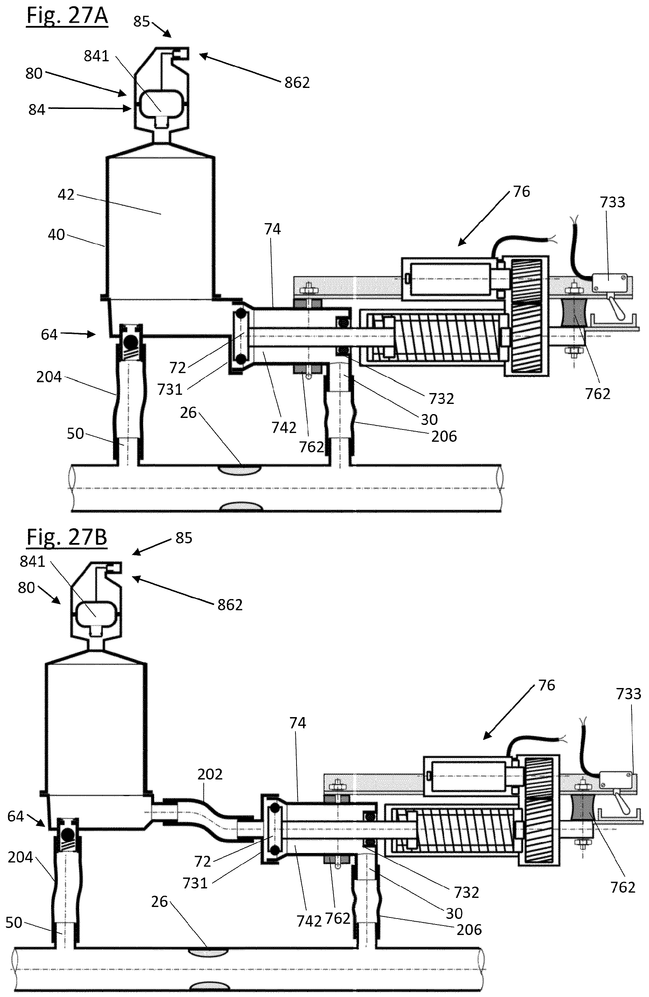

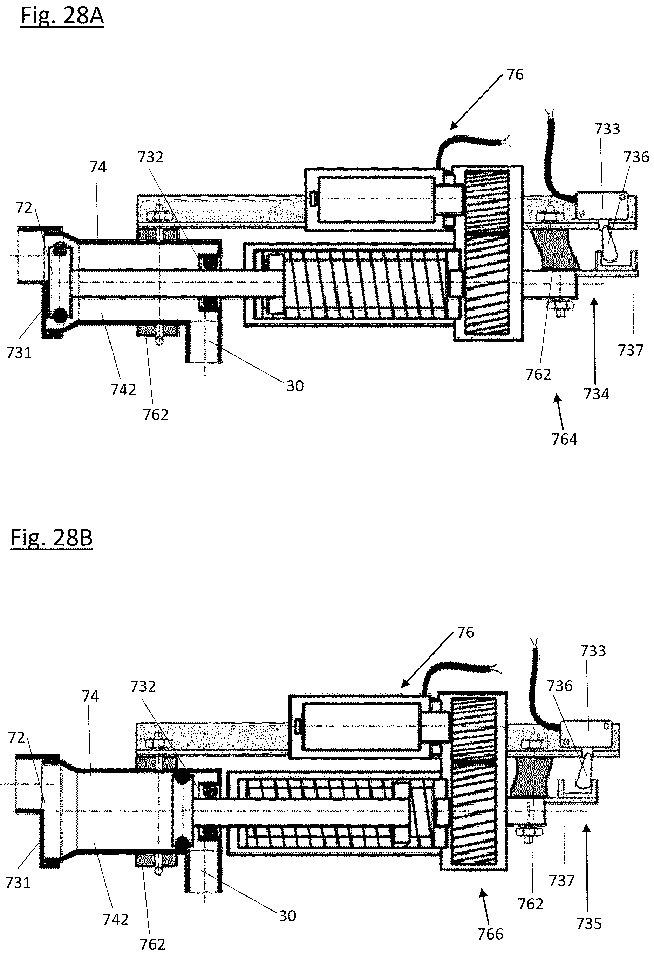

In figures 27A, 27B, 28A, and 28B, the degassing device comprises a first abutment 731 and a second abutment 732. These abutments can be used for the piston 72 to abut against. Also, the piston actuator 76 is fixed to the degasification housing via two resilient members 762, one is located near a direction switch 733 and another is located around the cylinder 74. These resilient members 762 allow the piston actuator to move and, when the piston 72 abuts against the first or second abutments 731, 732, the piston actuator moves itself relative to the degasification housing to a first actuator position 764 or a second actuator position 766. In the figures, the extension of the piston against the first abutment 731 moves the piston actuator into the first actuator position 764 and the retracting against the second abutment 732 moves the piston actuator into the second actuator position 766.

A direction switch 733 operates the piston actuator in a first direction when it is in a first switch position 734 and operates the piston actuator in a second direction when it is in a second switch position 735. As depicted in figures 28A and 28B, the movement from the first actuator position 764 to the second actuator position 766 moves the direction switch from the first switch position 734 to the second switch position 735 and vice versa. When the abutments are reached, a switch lever 736 of the direction switch engages a switch bracket 737. The movement of the piston actuator then pushes or pulls the switch lever 736 against the switch bracket 737 resulting the switching of direction. This causes the piston to move back and forth in an automated manner when the piston actuator 76 is operational and causes the degassing device to automatically start a new degassing cycle when a prior cycle has been completed . The direction switch may comprise a delay component that delays the operation of the piston actuator for a predetermined time period when the switch position is changed. In this way the piston remains idle in the extreme positions for a predetermined time period before it starts moving in the opposite direction.

In order to be able to change the shape of the space that is taken up by the degassing device, various parts may be connected by pipes. In figure 27A, the pressure reduction device is connected to the main flow channel via a pipe 206. Also, the degasification zone 42 is connected to the main flow channel via a pipe 204. Additionally, in figure 27B, the pressure reduction device is connected to the degasification zone via a pipe 202. In this way, one component is subdivided into two smaller components. This embodiment was found to be useful for floor heating systems which often have limited available space for a relatively large component. The two smaller components are easier to fit in a floor heating system.

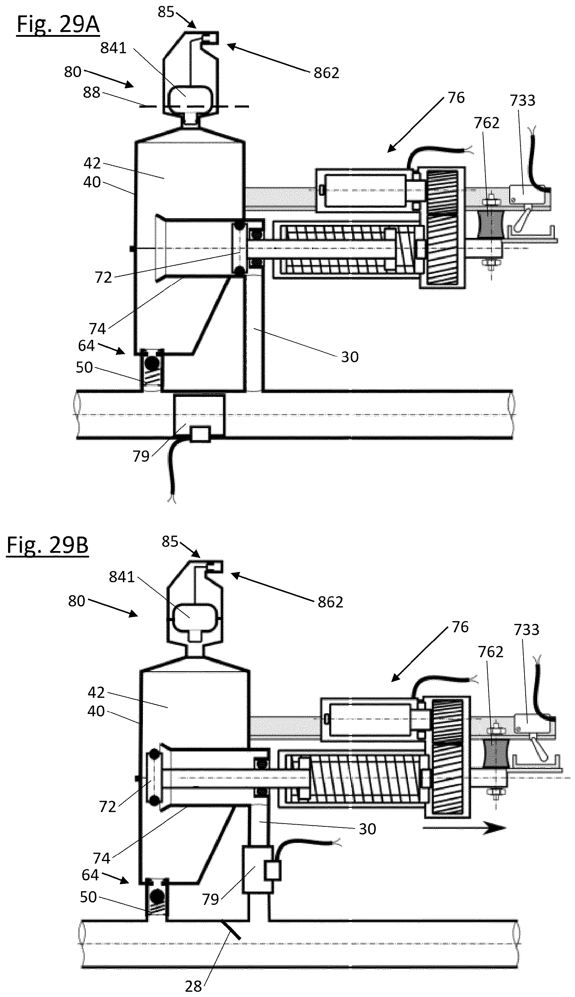

In figure 29A and 29B, a similar embodiment to that of figure 7 is depicted. In figure 29A, a flow switch 79 is located in the main flow channel. This flow switch 79 may also act as the constriction. When no flow is present in the main flow channel the flow switch will prevent the pressure reduction device from operating. This prevents the degassing device from operating when the liquid in the degasification zone is not refreshed after a cycle. Alternatively, the flow switch 79 may also be located in another part of the degassing device. An example thereof is shown in figure 29B where the flow switch is located in the branch flow passage 30.

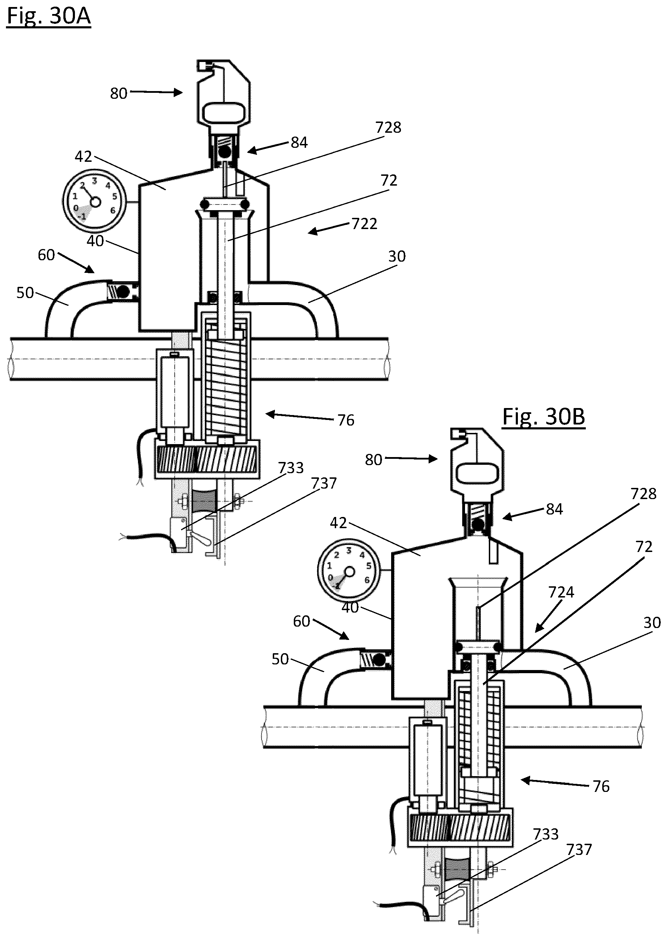

In figures 30A and 30B, the actuator end is configured to move the outlet closing body 84 being a non-return valve into and from an open state. To this end, when the piston is moved into its extended state 722, the actuator end 728 pushes the non-return valve open, allowing communication between the degasification zone and the outside. When the piston is moved to the retracted state 724, the actuator end disengages the non-return valve and the non-return valve closes causing the degasification zone to be disconnected from the outside.

The terms "a" or "an", as used herein, are defined as one or more than one. The term plurality, as used herein, is defined as two or more than two. The term another, as used herein, is defined as at least a second or more. The terms including and/or having, as used herein, are defined as comprising i.e., open language, not excluding other elements or steps.

Any reference signs in the claims should not be construed as limiting the scope of the claims or the invention. It will be recognized that a specific embodiment as claimed may not achieve all of the stated objects.

White lines between text paragraphs in the text above indicate that the technical features presented in the paragraph may be considered independent from technical features discussed in a preceding paragraph or in a subsequent paragraph.

## Claims

1. Degassing device (10) for degassing a gas-containing liquid in a cooling or heating installation, the degassing device comprising:
- a main flow channel (20) defined by a tube extending between a first side (22) and a second side (24), wherein in operation a main flow of liquid flows through the main flow channel,
- at least one flow passage (15) extending between the main flow channel and a degasification zone (42), the flow passage being configured to allow communication between the degasification zone and the main flow channel,
- a degasification housing (40) defining an inner volume, wherein the inner volume substantially corresponds to the degasification zone,
- at least one valve (60; 60A, 60B) which is moveable between a closed position (62) and an open position (64), wherein in the closed position the valve obstructs the flow passage, and closes off the degasification zone from the main flow channel and wherein in the open position the valve does not obstruct the flow passage,
- a pressure reduction device (70) connected to the degasification housing, wherein during operation, the pressure reduction device is configured to lower the pressure in the degasification zone relative to the pressure in the main flow channel,
- a gas outlet (80) in the degasification housing, the gas outlet comprising:
∘ an outlet tube (82) and an outlet closing body (84), wherein the outlet tube is closeable by the outlet closing body,
∘ an overflow valve (85) defining a gas outlet opening (862), wherein the overflow valve is connected to a floater (841), wherein the floater is configured to operate the overflow valve to close the gas outlet opening when a liquid level is higher than an overflow threshold level (89), and wherein the overflow threshold level (89) is higher than a closing location (881) of the outlet closing body,
- wherein the outlet closing body comprises:
∘ the floater (841), wherein the floater is moveable between a floating position (842) and a lower position (844), wherein when the liquid level drops below a predetermined liquid level (88) which is above the closing location, the floater is configured to engage an end of the outlet tube in the lower position, closing off the outlet tube, wherein the gas outlet further comprising a floater chamber (86), wherein the floater chamber comprises the overflow valve (85) defining a gas outlet opening (862) and wherein when a liquid level is higher than the overflow threshold level (89), the outlet closing body is configured to be moved to an upper position (846), closing the overflow valve, wherein the floater thus is configured to control both the overflow valve and configured to close the outlet tube when the liquid level drops below the predetermined liquid level, OR
∘ a gas outlet valve (87), wherein the gas outlet valve allows gas and/or liquid to flow between the outside and the degasification zone in an open state and closes off the degasification zone in a closed position,
wherein the degassing device is configured to carry out a degassing cycle, the degassing cycle comprising:
- a pressure reduction step, during which the gas outlet and the at least one valve are closed, wherein the pressure reduction device is configured to degas the gas-containing liquid by reducing the pressure, wherein at a start of the pressure reduction step, a liquid level in the degassing device is at the overflow threshold level and the outlet closing body closes off the outlet tube,
- a gas expulsion step, during which the pressure in the degasification zone is increased and separated gas is passed through the outlet tube and the gas outlet opening.

2. Degassing device according to the previous claim, wherein the device comprises two flow passages, a first flow passage being a branch flow passage (30), the branch flow passage being configured to branch off a branch flow being a portion of the main flow, and a second flow passage being a return flow passage (50) extending between the degasification zone and the main flow channel, the return flow channel being configured to return a return flow to the main flow channel, wherein the degassing device optionally comprises a first valve (60A) and a second valve (60B), wherein:
the first valve (60A) is moveable between a closed position and an open position,
wherein in the closed position the first valve obstructs the branch flow passage and closes off the degasification zone from the main flow channel and wherein in the open position the first valve does not obstruct the branch flow passage, and
the second valve (60B) which is moveable between a closed position and an open position, wherein in the closed position the first valve obstructs the return flow passage and closes off the degasification zone from the main flow channel and wherein in the open position the second valve does not obstruct the return flow passage
wherein optionally the second valve is a non-return valve.

3. Degassing device according to any of the previous claims, wherein the pressure reduction device is connected to the degasification housing and wherein the pressure reduction device comprises a piston (72), a cylinder (74), and a piston actuator (766) and wherein the piston is moveable between an idle pressure position (722) and a low pressure position (724) and wherein the cylinder is in open communication with the inner volume,
wherein in the low pressure position of the piston the degasification zone extends into the cylinder and is larger than in the idle pressure position of the piston,
wherein the degasification zone is delimited by the degasification housing, and by at least part of an outer surface of the piston and/or by at least a part of the inner surface of the cylinder
wherein optionally a retracted position (723) of the piston corresponds to the low pressure position and an extended position (725) of the piston corresponds to the idle pressure position, or wherein an extended position of the piston corresponds to the low pressure position and a retracted position of the piston corresponds to the idle pressure position,

4. Degassing device according to any of the previous claims, wherein the pressure reduction device is located in a lower part of the degasification housing and wherein the pressure reduction device is configured to be operated below a liquid level in the degasification housing.

5. Degassing device according to any of the previous claims, wherein the first valve is integrated in the pressure reduction device, in particular in the piston, wherein the piston comprises a part which obstructs the branch flow path in the low pressure position.

6. Degassing device according to any of the previous claims,
wherein the floater comprises a protrusion (83) being configured to close off the outlet tube and being located on a lower side (832) of the floater, and wherein an outer dimension of the protrusion substantially matches an inner dimension of the outlet tube, OR
wherein the overflow valve comprises a backflow preventer (852) configured to allow gas to escape but not to enter the gas outlet, in particular the backflow preventer being a non-return valve,
wherein optionally the floater comprises an O-ring or a double lip seal to close off the outlet tube in the lower position.

7. Degassing device according to any of the previous claims, the gas outlet valve being a ball valve or a non-return valve.

8. Degassing device according to any of the previous claims, wherein the main flow channel is constricted between the first side and the second side, wherein a constriction (26) is configured to increase pressure near the branch flow passage, forcing a portion of the main flow into the degasification housing and/or wherein the main flow channel comprises a branch flow separator (28) protruding into the main flow channel configured to branch off a portion of the main flow into the degasification zone and/or the main flow channel comprises a main flow valve (27) configured to branch off a portion of the main flow into the degasification zone,
wherein the constriction optionally comprises a non-return valve (60C).

9. Degassing device according to any of the previous claims, further comprising at least one sensor (92) and a control unit (90) configured to read out the at least one sensor and/or to control the pressure reduction device, wherein the pressure reduction device comprises the sensor configured to measure a pressure in the degasification zone.

10. Degassing device according to any of the previous claims, wherein the outlet closing body is a non-return valve, and the non-return valve is preferably actuated by an actuator.

11. Method for degassing a gas-containing liquid in a cooling or heating installation by using a degassing device (10) according to any of the preceding claims, wherein the method comprises the steps:
a) branching off a portion of the main flow through the at least one flow passage,
b) moving the at least one valve to the respective closed position, respectively obstructing the at least one flow passage, closing off the degasification zone from the main flow channel, and closing the gas outlet,
c) operating the pressure reduction device to lower the pressure in the degasification zone relative to the pressure in the main flow channel,
d) opening the at least one valve and the gas outlet,
wherein the degassing cycle comprises a pressure reduction step comprising steps a), b), and c), and comprises a gas expulsion step comprising step d), wherein,
- during the pressure reduction step, the gas outlet and the at least one valve are closed, wherein the pressure reduction device is configured to degas the gas-containing liquid by reducing the pressure, wherein at a start of the pressure reduction step, a liquid level in the degassing device is at the overflow threshold level and the outlet closing body closes off the outlet tube at the closing location,
- during the gas expulsion step, the pressure in the degasification zone is increased and separated gas is passed through the outlet tube and the gas outlet opening.

12. Method according to the previous method claim, wherein the degassing device comprises two flow passages, a first flow passage being a branch flow passage (30), and a second flow passage being a return flow passage (50).

13. Method according to the previous method claim, wherein the pressure reduction device is connected to the degasification housing and wherein the pressure reduction device comprises a piston (72), a cylinder (74), and a piston actuator (76), the cylinder being in open communication with the inner volume, and wherein during step c) the piston is moved between an extended position (722) and a retracted position (724), wherein the degasification zone is delimited by the degasification housing and the piston,
wherein optionally the degasification zone is enlarged into the cylinder when the piston is moved from the extended position to the retracted position and the degasification zone is larger in the retracted position than in the extended position, or wherein the degasification zone is enlarged into the cylinder when the piston is moved from the retracted position to the extended position and the degasification zone is larger in the extended position than in the retracted position,
wherein optionally the branch flow passage extends through the cylinder between the main flow channel and the degasification zone and wherein optionally step b) and step c) occur substantially simultaneous and wherein optionally the moving of the piston moves the at least one valve to the closed position, and/or closes the gas outlet, wherein optionally the piston comprises an actuator end (728) and the first valve is optionally a non-return valve, wherein optionally when the piston is moved to the extended position, the actuator end moves the first valve to the open position, and wherein optionally when the piston is moved to the retracted position, the valve is allowed to move to the closed position.

14. Method according to any of the previous method claims, wherein the outlet closing body comprises a floater and wherein when a liquid level is lower than a predetermined level (88), the floater closes off a gas outlet tube (82),
wherein optionally the gas outlet further comprises a overflow valve (85) and wherein when a liquid level is at a second predetermined level (89), the overflow valve closes off the gas outlet opening,
wherein optionally the floater comprises a protrusion (83), and an outer dimension of the protrusion substantially matches an inner dimension of the outlet tube and wherein during step b) the protrusion is forced into the outlet tube
wherein optionally the floater comprises a backflow preventer (852), wherein the backflow preventer prevents gas to flow into the degasification zone when an outside pressure is larger than a pressure inside the degasification housing, in particular the backflow preventer preventing gas to flow into the degasification zone during step c).

15. Method according to any of the previous method claims, wherein the main flow channel is constricted between the first side and the second side, wherein a constriction (26) increases pressure near the branch flow passage and forces at least a portion of the main flow into the degasification housing and/or wherein the main flow channel comprises a branch flow separator (28) that branches off at least a portion of the main flow into the degasification zone and/or the main flow channel comprises a main flow valve (27) configured to branch off a portion of the main flow into the degasification zone, wherein optionally prior to step d), the pressure in the degasification zone is increased to substantially the pressure present during step a).

## Patentansprüche

1. Entgasungsvorrichtung (10) zum Entgasen einer gashaltigen Flüssigkeit in einer Kühl- oder Heizanlage, wobei die Entgasungsvorrichtung Folgendes umfasst:
- einen Hauptströmungskanal (20), der durch ein Rohr definiert ist, das sich zwischen einer ersten Seite (22) und einer zweiten Seite (24) erstreckt, wobei im Betrieb ein Hauptstrom von Flüssigkeit durch den Hauptströmungskanal strömt,
- mindestens einen Strömungsdurchgang (15), der sich zwischen dem Hauptströmungskanal und einer Entgasungszone (42) erstreckt, wobei der Strömungsdurchgang dazu ausgelegt ist, eine Verbindung zwischen der Entgasungszone und dem Hauptströmungskanal zu ermöglichen,
- ein Entgasungsgehäuse (40), das ein Innenvolumen definiert, wobei das Innenvolumen im Wesentlichen der Entgasungszone entspricht,
- mindestens ein Ventil (60; 60A, 60B), das zwischen einer geschlossenen Position (62) und einer offenen Position (64) beweglich ist, wobei das Ventil in der geschlossenen Position den Strömungsdurchgang sperrt und die Entgasungszone vom Hauptströmungskanal verschließt und wobei das Ventil in der offenen Position den Strömungsdurchgang nicht sperrt,
- eine Druckreduziervorrichtung (70), die mit dem Entgasungsgehäuse verbunden ist, wobei die Druckreduziervorrichtung während des Betriebs dazu ausgelegt ist, den Druck in der Entgasungszone relativ zum Druck im Hauptströmungskanal zu senken,
- einen Gasauslass (80) in dem Entgasungsgehäuse, wobei der Gasauslass Folgendes umfasst:
∘ ein Auslassrohr (82) und einen Auslassschließkörper (84), wobei das Auslassrohr durch den Auslassschließkörper verschließbar ist,
∘ ein Überströmventil (85), das eine Gasauslassöffnung (862) definiert, wobei das Überströmventil mit einem Schwimmer (841) verbunden ist, wobei der Schwimmer dazu ausgelegt ist, das Überströmventil zu betätigen, um die Gasauslassöffnung zu schließen, wenn ein Flüssigkeitsstand höher als ein Überströmschwellenstand (89) ist, und wobei der Überströmschwellenstand (89) höher als eine Schließposition (881) des Auslassschließkörpers ist,
- wobei der Auslassschließkörper Folgendes umfasst:
∘ den Schwimmer (841), wobei der Schwimmer zwischen einer Schwimmposition (842) und einer unteren Position (844) beweglich ist, wobei, wenn der Flüssigkeitsstand unter einen vorbestimmten Flüssigkeitsstand (88) fällt, der sich über der Schließposition befindet, der Schwimmer dazu ausgelegt ist, in die untere Position mit einem Ende des Auslassrohrs in Eingriff zu treten, das das Auslassrohr verschließt, wobei der Gasauslass ferner eine Schwimmerkammer (86) umfasst, wobei die Schwimmerkammer das Überströmventil (85) umfasst, das eine Gasauslassöffnung (862) definiert, und wobei, wenn ein Flüssigkeitsstand höher als der Überströmschwellenstand (89) ist, der Auslassschließkörper dazu ausgelegt ist, in eine obere Position (846) bewegt zu werden, die das Überströmventil schließt, wobei der Schwimmer somit dazu ausgelegt ist, sowohl das Überströmventil zu steuern, als auch dazu ausgelegt ist, das Auslassrohr zu schließen, wenn der Flüssigkeitsstand unter den vorbestimmten Flüssigkeitsstand fällt, ODER
∘ ein Gasauslassventil (87), wobei das Gasauslassventil in einem offenen Zustand Gas und/oder Flüssigkeit zwischen der Außenseite und der Entgasungszone strömen lässt und in einer geschlossenen Position die Entgasungszone verschließt,
wobei die Entgasungsvorrichtung dazu ausgelegt ist, einen Entgasungszyklus durchzuführen, wobei der Entgasungszyklus Folgendes umfasst:
- einen Druckreduzierungsschritt, bei dem der Gasauslass und das mindestens eine Ventil geschlossen sind, wobei die Druckreduziervorrichtung dazu ausgelegt ist, die gashaltige Flüssigkeit durch Reduzieren des Drucks zu entgasen, wobei zu Beginn des Druckreduzierungsschritts ein Flüssigkeitsstand in der Entgasungsvorrichtung auf dem Überlaufschwellenstand ist und der Auslassschließkörper das Auslassrohr verschließt,
- einen Gasausstoßschritt, bei dem der Druck in der Entgasungszone erhöht wird und abgeschiedenes Gas durch das Auslassrohr und die Gasauslassöffnung geleitet wird.

2. Entgasungsvorrichtung nach dem vorhergehenden Anspruch, wobei die Vorrichtung zwei Strömungsdurchgänge umfasst, wobei ein erster Strömungsdurchgang ein Abzweigströmungsdurchgang (30) ist, wobei der Abzweigströmungsdurchgang dazu ausgelegt ist, einen Abzweigstrom abzuzweigen, der ein Teil des Hauptstroms ist, und einen zweiten Strömungsdurchgang, der ein Rückflussdurchgang (50) ist, der sich zwischen der Entgasungszone und dem Hauptströmungskanal erstreckt, wobei der Rückflusskanal dazu ausgelegt ist, einen Rückfluss zum Hauptströmungskanal zurückzuleiten, wobei die Entgasungsvorrichtung optional ein erstes Ventil (60A) und ein zweites Ventil (60B) umfasst, wobei:
das erste Ventil (60A) zwischen einer geschlossenen Position und einer offenen Position beweglich ist, wobei in der geschlossenen Position das erste Ventil den Abzweigströmungsdurchgang sperrt und die Entgasungszone vom Hauptströmungskanal verschließt und wobei in der offenen Position das erste Ventil den Abzweigströmungsdurchgang nicht sperrt, und
das zweite Ventil (60B), das zwischen einer geschlossenen Position und einer offenen Position beweglich ist, wobei das erste Ventil in der geschlossenen Position den Rückflussdurchgang sperrt und die Entgasungszone vom Hauptströmungskanal verschließt, und wobei das zweite Ventil in der offenen Position den Rückflussdurchgang nicht versperrt,
wobei optional das zweite Ventil ein Rückschlagventil ist.

3. Entgasungsvorrichtung nach einem der vorhergehenden Ansprüche, wobei die Druckreduziervorrichtung mit dem Entgasungsgehäuse verbunden ist und wobei die Druckreduziervorrichtung einen Kolben (72), einen Zylinder (74) und einen Kolbenaktuator (766) umfasst und wobei der Kolben zwischen einer Leerlaufdruckposition (722) und einer Niederdruckposition (724) beweglich ist und wobei der Zylinder in offener Verbindung mit dem Innenvolumen steht,
wobei sich in der Niederdruckposition des Kolbens die Entgasungszone in den Zylinder erstreckt und größer als in der Leerlaufdruckposition des Kolbens ist,
wobei die Entgasungszone durch das Entgasungsgehäuse und durch mindestens einen Teil einer Außenfläche des Kolbens und/oder durch mindestens einen Teil der Innenfläche des Zylinders begrenzt ist,
wobei optional eine eingezogene Position (723) des Kolbens der Niederdruckposition entspricht und eine ausgefahrene Position (725) des Kolbens der Leerlaufdruckposition entspricht, oder wobei eine ausgefahrene Position des Kolbens der Niederdruckposition entspricht und eine eingezogene Position des Kolbens der Leerlaufdruckposition entspricht.

4. Entgasungsvorrichtung nach einem der vorhergehenden Ansprüche, wobei sich die Druckreduziervorrichtung in einem unteren Teil des Entgasungsgehäuses befindet und wobei die Druckreduziervorrichtung dazu ausgelegt ist, unterhalb eines Flüssigkeitsstands im Entgasungsgehäuse betätigt zu werden.

5. Entgasungsvorrichtung nach einem der vorhergehenden Ansprüche, wobei das erste Ventil in die Druckreduziervorrichtung, insbesondere in den Kolben, integriert ist, wobei der Kolben einen Teil umfasst, der den Abzweigströmungsweg in der Niederdruckposition sperrt.

6. Entgasungsvorrichtung nach einem der vorhergehenden Ansprüche, wobei der Schwimmer einen Vorsprung (83) umfasst, der dazu ausgelegt ist, das Auslassrohr zu verschließen, und sich an einer unteren Seite (832) des Schwimmers befindet, und wobei eine Außenabmessung des Vorsprungs im Wesentlichen mit einer Innenabmessung des Auslassrohrs übereinstimmt, ODER
wobei das Überströmventil einen Rückflussverhinderer (852) umfasst, der dazu ausgelegt ist, Gas entweichen, aber nicht in den Gasauslass eintreten zu lassen, wobei insbesondere der Rückflussverhinderer ein Rückschlagventil ist,
wobei optional der Schwimmer einen O-Ring oder eine Doppellippendichtung umfasst, um das Auslassrohr in der unteren Position zu verschließen.

7. Entgasungsvorrichtung nach einem der vorhergehenden Ansprüche, wobei das Gasauslassventil ein Kugelventil oder ein Rückschlagventil ist.

8. Entgasungsvorrichtung nach einem der vorhergehenden Ansprüche, wobei der Hauptströmungskanal zwischen der ersten Seite und der zweiten Seite verengt ist, wobei eine Verengung (26) dazu ausgelegt ist, den Druck in der Nähe des Abzweigströmungsdurchgangs zu erhöhen und dadurch einen Teil des Hauptstroms in das Entgasungsgehäuse zu zwingen, und/oder wobei der Hauptströmungskanal einen Abzweigstromabscheider (28) umfasst, der in den Hauptströmungskanal hineinragt, der dazu ausgelegt ist, einen Teil des Hauptstroms in die Entgasungszone abzuzweigen, und/oder wobei der Hauptströmungskanal ein Hauptstromventil (27) umfasst, das dazu ausgelegt ist, einen Teil des Hauptstroms in die Entgasungszone abzuzweigen,
wobei die Verengung optional ein Rückschlagventil (60C) umfasst.

9. Entgasungsvorrichtung nach einem der vorhergehenden Ansprüche, ferner umfassend mindestens einen Sensor (92) und eine Steuereinheit (90), die dazu ausgelegt ist, den mindestens einen Sensor auszulesen und/oder die Druckreduziervorrichtung zu steuern, wobei die Druckreduziervorrichtung den Sensor umfasst, der dazu ausgelegt ist, einen Druck in der Entgasungszone zu messen.

10. Entgasungsvorrichtung nach einem der vorhergehenden Ansprüche, wobei der Auslassschließkörper ein Rückschlagventil ist und das Rückschlagventil vorzugsweise durch einen Aktuator betätigt wird.

11. Verfahren zum Entgasen einer gashaltigen Flüssigkeit in einer Kühl- oder Heizanlage unter Verwendung einer Entgasungsvorrichtung (10) nach einem der vorhergehenden Ansprüche, wobei das Verfahren die folgenden Schritte umfasst:
a) Abzweigen eines Teils des Hauptstroms durch den mindestens einen Strömungsdurchgang,
b) Bewegen des mindestens einen Ventils in die jeweilige geschlossene Position, die jeweils den mindestens einen Strömungsdurchgang sperrt, die Entgasungszone vom Hauptströmungskanal abschließt und den Gasauslass schließt,
c) Betätigen der Druckreduziervorrichtung, um den Druck in der Entgasungszone relativ zum Druck im Hauptströmungskanal zu senken,
d) Öffnen des mindestens einen Ventils und des Gasauslasses,
wobei der Entgasungszyklus einen Druckreduzierungsschritt umfasst, der die Schritte a), b) und c) umfasst und einen Gasausstoßschritt umfasst, der Schritt d) umfasst, wobei
- während des Druckreduzierungsschritts der Gasauslass und das mindestens eine Ventil geschlossen sind, wobei die Druckreduziervorrichtung dazu ausgelegt ist, die gashaltige Flüssigkeit durch Reduzieren des Drucks zu entgasen, wobei zu Beginn des Druckreduzierungsschritts ein Flüssigkeitsstand in der Entgasungsvorrichtung auf dem Überlaufschwellenstand ist und der Auslassschließkörper das Auslassrohr an der Schließposition verschließt,
- während des Gasausstoßschritts der Druck in der Entgasungszone erhöht wird und abgeschiedenes Gas durch das Auslassrohr und die Gasauslassöffnung geleitet wird.

12. Verfahren nach dem vorhergehenden Verfahrensanspruch, wobei die Entgasungsvorrichtung zwei Strömungsdurchgänge umfasst, wobei ein erster Strömungsdurchgang ein Abzweigströmungsdurchgang (30) ist und ein zweiter Strömungsdurchgang ein Rückflussdurchgang (50) ist.

13. Verfahren nach dem vorhergehenden Verfahrensanspruch, wobei die Druckreduziervorrichtung mit dem Entgasungsgehäuse verbunden ist und wobei die Druckreduziervorrichtung einen Kolben (72), einen Zylinder (74) und einen Kolbenaktuator (76) umfasst, wobei der Zylinder in offener Verbindung mit dem Innenvolumen steht, und wobei während Schritt c) der Kolben zwischen einer ausgefahrenen Position (722) und einer eingezogenen Position (724) bewegt wird, wobei die Entgasungszone durch das Gehäuse und den Kolben begrenzt wird,
wobei optional die Entgasungszone in den Zylinder vergrößert wird, wenn der Kolben von der ausgefahrenen Position in die eingefahrene Position bewegt wird und die Entgasungszone in der eingefahrenen Position größer als in der ausgefahrenen Position ist, oder wobei die Entgasungszone in den Zylinder vergrößert wird, wenn der Kolben von der eingefahrenen Position in die ausgefahrene Position bewegt wird und die Entgasungszone in der ausgefahrenen Position größer als in der eingefahrenen Position ist,
wobei sich optional der Abzweigströmungsdurchgang durch den Zylinder zwischen dem Hauptströmungskanal und der Entgasungszone erstreckt und wobei optional Schritt b) und Schritt c) im Wesentlichen gleichzeitig stattfinden und wobei optional das Bewegen des Kolbens das mindestens eine Ventil in die geschlossene Position bewegt und/oder den Gasauslass schließt,
wobei optional der Kolben ein Aktuatorende (728) umfasst und das erste Ventil optional ein Rückschlagventil ist, wobei optional, wenn der Kolben in die ausgefahrene Position bewegt wird, das Aktuatorende das erste Ventil in die offene Position bewegt, und
wobei optional, wenn der Kolben in die eingezogene Position bewegt wird, das Ventil in die geschlossene Position bewegt werden kann.

14. Verfahren nach einem der vorhergehenden Verfahrensansprüche, wobei der Auslassschließkörper einen Schwimmer umfasst und wobei, wenn ein Flüssigkeitsstand niedriger als ein vorbestimmter Stand (88) ist, der Schwimmer ein Gasauslassrohr (82) verschließt, wobei optional der Gasauslass ferner ein Überströmventil (85) umfasst und wobei, wenn sich ein Flüssigkeitsstand auf einem zweiten vorbestimmten Stand (89) befindet, das Überströmventil die Gasauslassöffnung verschließt,
wobei optional der Schwimmer einen Vorsprung (83) umfasst und eine Außenabmessung des Vorsprungs im Wesentlichen mit einer Innenabmessung des Auslassrohrs übereinstimmt und wobei während Schritt b) der Vorsprung in das Auslassrohr gedrückt wird,
wobei optional der Schwimmer einen Rückflussverhinderer (852) umfasst, wobei der Rückflussverhinderer verhindert, dass Gas in die Entgasungszone strömt, wenn ein Außendruck größer als ein Druck innerhalb des Entgasungsgehäuses ist, wobei der Rückflussverhinderer insbesondere verhindert, dass Gas während Schritt c) in die Entgasungszone strömt.

15. Verfahren nach einem der vorhergehenden Verfahrensansprüche, wobei der Hauptströmungskanal zwischen der ersten Seite und der zweiten Seite verengt ist, wobei eine Verengung (26) den Druck in der Nähe des Abzweigströmungsdurchgangs erhöht und mindestens einen Teil des Hauptstroms in das Entgasungsgehäuse zwingt und/oder wobei der Hauptströmungskanal einen Abzweigstromabscheider (28) umfasst, der mindestens einen Teil des Hauptstroms in die Entgasungszone abzweigt, und/oder der Hauptströmungskanal ein Hauptstromventil (27) umfasst, das dazu ausgelegt ist, einen Teil des Hauptstroms in die Entgasungszone abzuzweigen, wobei optional vor Schritt d) der Druck in der Entgasungszone auf im Wesentlichen den während Schritt a) vorliegenden Druck erhöht wird.

## Revendications

1. Dispositif (10) de dégazage pour dégazer un liquide contenant du gaz dans une installation de refroidissement ou de chauffage, le dispositif de dégazage comprenant :
- un canal (20) d'écoulement principal défini par un tube s'étendant entre un premier côté (22) et un deuxième côté (24), un écoulement principal de liquide circulant, en cours de fonctionnement, dans le canal d'écoulement principal,
- au moins un passage (15) d'écoulement s'étendant entre le canal d'écoulement principal et une zone (42) de dégazage, le passage d'écoulement étant configuré pour permettre une communication entre la zone de dégazage et le canal d'écoulement principal,
- une enceinte (40) de dégazage définissant un volume intérieur, le volume intérieur correspondant sensiblement à la zone de dégazage,
- au moins une soupape (60 ; 60A, 60B) qui est susceptible d'être déplacée entre une position fermée (62) et une position ouverte (64), la soupape obstruant le passage d'écoulement, et isolant la zone de dégazage du canal d'écoulement principal et, en position ouverte, la soupape n'obstruant pas le passage d'écoulement,
- un dispositif (70) de réduction de pression relié à l'enceinte de dégazage, le dispositif de réduction de pression étant, en cours de fonctionnement, configuré pour abaisser la pression dans la zone de dégazage par rapport à la pression dans le canal d'écoulement principal,
- une sortie (80) de gaz dans l'enceinte de dégazage, la sortie de gaz comportant :
∘ un tube (82) de sortie et un corps (84) de fermeture de sortie, le tube de sortie pouvant être fermé par le corps de fermeture de sortie,
∘ une soupape (85) de trop-plein définissant une ouverture (862) de sortie de gaz, la soupape de trop-plein étant liée à un flotteur (841), le flotteur étant configuré pour actionner la soupape de trop-plein afin de fermer l'ouverture de sortie de gaz lorsqu'un niveau de liquide est supérieur à un niveau seuil (89) de trop-plein, et le niveau seuil (89) de trop-plein se trouvant plus haut qu'un emplacement (881) de fermeture du corps de fermeture de sortie,
- le corps de fermeture de sortie comprenant :
∘ le flotteur (841), le flotteur étant susceptible d'être déplacé entre une position flottante (842) et une position inférieure (844), le flotteur étant configuré, lorsque le niveau de liquide descend en dessous d'un niveau prédéterminé (88) de liquide qui est au-dessus de l'emplacement de fermeture, pour interagir avec une extrémité du tube de sortie dans la position inférieure, fermant le tube de sortie, la sortie de gaz comprenant en outre une chambre (86) à flotteur, la chambre à flotteur comprenant la soupape (85) de trop-plein définissant une ouverture (862) de sortie de gaz et, lorsqu'un niveau de liquide est supérieur au niveau (89) de seuil de trop-plein, le corps de fermeture de sortie étant configuré pour être amené dans une position haute (846) fermant la soupape de trop-plein, le flotteur étant ainsi configuré pour commander à la fois la soupape de trop-plein et pour fermer le tube de sortie lorsque le niveau de liquide tombe au-dessous du niveau de liquide prédéterminé, ou
∘ une soupape (87) de sortie de gaz, la soupape de sortie de gaz permettant à l'écoulement de gaz et/ou de liquide de circuler entre l'extérieur et la zone de dégazage dans un état ouvert et isolant la zone de dégazage dans une position fermée,
le dispositif de dégazage étant configuré pour exécuter un cycle de dégazage, le cycle de dégazage comprenant :
- une étape de réduction de pression pendant laquelle la sortie de gaz et la ou les soupapes sont fermées, le dispositif de réduction de pression étant configuré pour dégazer le liquide contenant du gaz en réduisant la pression, dans laquelle, au début de l'étape de réduction de pression, un niveau de liquide dans le dispositif de dégazage est au niveau de seuil de trop-plein et le corps de fermeture de sortie obture le tube de sortie,
- une étape d'expulsion de gaz pendant laquelle la pression dans la zone de dégazage est augmentée et un gaz séparé est acheminé à travers le tube de sortie et l'ouverture de sortie de gaz.

2. Dispositif de dégazage selon la revendication précédente, le dispositif comprenant deux passages d'écoulement, un premier passage d'écoulement étant un passage (30) d'écoulement dérivé, le passage d'écoulement dérivé étant configuré pour dériver un écoulement dérivé qui est une partie de l'écoulement principal, et un deuxième passage d'écoulement qui est un passage (50) de retour s'étendant entre la zone de dégazage et le canal d'écoulement principal, le canal d'écoulement de retour étant configuré pour renvoyer un écoulement de retour vers le canal d'écoulement principal, le dispositif de dégazage comprenant optionnellement une première soupape (60A) et une deuxième soupape (60B) dans lesquelles :
la première soupape (60A) est susceptible d'être déplacée entre une position fermée et une position ouverte, la première soupape, en position fermée, obstruant le passage d'écoulement de dérivation et isolant la zone de dégazage du canal d'écoulement principal et, en position ouverte, la première soupape n'obstruant pas le passage d'écoulement de dérivation, et
la deuxième soupape (60B) qui est susceptible d'être déplacée entre une position fermée et une position ouverte, la première soupape, en position fermée, obstruant le passage d'écoulement de retour et isolant la zone de dégazage du canal d'écoulement principal et, en position ouverte, la deuxième soupape n'obstruant pas le passage d'écoulement de retour
la seconde soupape étant éventuellement un clapet anti-retour.

3. Dispositif de dégazage selon l'une quelconque des revendications précédentes, le dispositif de réduction de pression étant relié à l'enceinte de dégazage et le dispositif de réduction de pression comprenant un piston (72), un cylindre (74) et un actionneur (766) de piston et le piston étant susceptible d'être déplacé entre une position (722) de pression au repos et une position (724) de basse pression et le cylindre étant en communication ouverte avec le volume intérieur,
la zone de dégazage, dans la position de basse pression du piston, s'étendant jusque dans le cylindre et étant plus grande que dans la position de pression au repos du piston,
la zone de dégazage étant délimitée par l'enceinte de dégazage, et par au moins une partie d'une surface extérieure du piston et/ou par au moins une partie de la surface intérieure du cylindre
éventuellement, une position rétractée (723) du piston correspondant à la position de basse pression et une position déployée (725) du piston correspondant à la position de pression au repos, ou une position déployée du piston correspondant à la position de basse pression et une position rétractée du piston correspondant à la position de pression au repos.

4. Dispositif de dégazage selon l'une quelconque des revendications précédentes, le dispositif de réduction de pression étant situé dans une partie inférieure de l'enceinte de dégazage et le dispositif de réduction de pression étant configuré pour être mis en fonctionnement en dessous d'un niveau de liquide dans l'enceinte de dégazage.

5. Dispositif de dégazage selon l'une quelconque des revendications précédentes, la première soupape étant intégrée dans le dispositif de réduction de pression, en particulier dans le piston, le piston comprenant une partie qui obstrue le trajet d'écoulement de dérivation dans la position de basse pression.

6. Dispositif de dégazage selon l'une quelconque des revendications précédentes,
le flotteur comprenant une saillie (83) qui est configurée pour fermer le tube de sortie et qui est située sur un côté inférieur (832) du flotteur, et une dimension extérieure de la saillie correspondant sensiblement à une dimension intérieure du tube de sortie, OU
le clapet de trop-plein comprenant un moyen anti-reflux (852) configuré pour permettre à du gaz de s'échapper mais pas d'entrer dans la sortie de gaz, le moyen anti-reflux étant en particulier un clapet anti-retour,
le flotteur comportant éventuellement un joint torique ou un joint à double lèvre pour fermer le tube de sortie dans la position basse.

7. Dispositif de dégazage selon l'une quelconque des revendications précédentes, la soupape de sortie de gaz étant une soupape à bille ou un clapet anti-retour.

8. Dispositif de dégazage selon l'une quelconque des revendications précédentes, le canal d'écoulement principal étant rétréci entre le premier côté et le deuxième côté, un rétrécissement (26) étant configuré pour augmenter la pression près du passage d'écoulement de dérivation, forçant une partie de l'écoulement principal à entrer dans l'enceinte de dégazage et/ou le canal d'écoulement principal comprenant un séparateur (28) d'écoulement dérivé faisant saillie dans le canal d'écoulement principal configuré pour dériver une partie de l'écoulement principal jusque dans la zone de dégazage et/ou le canal d'écoulement principal comprenant une soupape (27) d'écoulement principal configurée pour dériver une partie de l'écoulement principal jusque dans la zone de dégazage,
le rétrécissement comportant éventuellement un clapet anti-retour (60C).

9. Dispositif de dégazage selon l'une quelconque des revendications précédentes, comprenant en outre au moins un capteur (92) et une unité (90) de commande configurée pour lire le ou les capteurs et/ou pour commander le dispositif de réduction de pression, le dispositif de réduction de pression comprenant le capteur configuré pour mesurer une pression dans la zone de dégazage.

10. Dispositif de dégazage selon l'une quelconque des revendications précédentes, dans lequel le corps de fermeture de sortie étant un clapet anti-retour, et le clapet anti-retour étant de préférence actionné par un actionneur.

11. Procédé de dégazage d'un liquide contenant du gaz dans une installation de refroidissement ou de chauffage en utilisant un dispositif (10) de dégazage selon l'une des revendications précédentes, dans lequel le procédé comprenant les étapes de :
a) dérivation d'une partie de l'écoulement principal à travers le ou les passages d'écoulement,
b) déplacement de la ou des soupapes jusqu'à la position fermée respective, obstruant respectivement le ou les passages d'écoulement, isolant la zone de dégazage du canal d'écoulement principal, et fermant la sortie de gaz,
c) mise en fonctionnement du dispositif de réduction de pression pour abaisser la pression dans la zone de dégazage par rapport à la pression dans le canal d'écoulement principal,
d) ouverture de la ou des soupapes et de la sortie de gaz,
le cycle de dégazage comprenant une étape de réduction de pression comprenant les étapes a), b), et c), et comprenant une étape d'expulsion de gaz comprenant l'étape d), dans laquelle,
- pendant l'étape de réduction de pression, la sortie de gaz et la ou les soupapes sont fermées, le dispositif de réduction de pression étant configuré pour dégazer le liquide contenant du gaz en réduisant la pression, un niveau de liquide dans le dispositif de dégazage étant au niveau du seuil de trop-plein et le corps de fermeture de sortie obturant le tube de sortie à l'emplacement de fermeture,
- pendant l'étape d'expulsion de gaz, la pression dans la zone de dégazage est augmentée et un gaz séparé est acheminé à travers le tube de sortie et l'ouverture de sortie de gaz.

12. Procédé selon la revendication précédente de procédé, le dispositif de dégazage comprenant deux passages d'écoulement, un premier passage d'écoulement étant un passage (30) d'écoulement de dérivation, et un second passage d'écoulement étant un passage (50) d'écoulement de retour.

13. Procédé selon la revendication précédente de procédé, le dispositif de réduction de pression étant relié à l'enceinte de dégazage et le dispositif de réduction de pression comprenant un piston (72), un cylindre (74) et un actionneur (76) de piston, le cylindre étant en communication ouverte avec le volume intérieur, et le piston étant déplacé, pendant l'étape c), entre une position déployée (722) et une position rétractée (724), la zone de dégazage étant délimitée par l'enceinte de dégazage et le piston,
éventuellement, la zone de dégazage étant agrandie dans le cylindre lorsque le piston est déplacé de la position déployée à la position rétractée et la zone de dégazage étant plus grande dans la position rétractée que dans la position déployée, ou la zone de dégazage étant agrandie dans le cylindre lorsque le piston est déplacé de la position rétractée à la position déployée et la zone de dégazage étant plus grande dans la position déployée que dans la position rétractée, éventuellement, le passage d'écoulement de dérivation s'étendant à travers le cylindre entre le canal d'écoulement principal et la zone de dégazage et, éventuellement, l'étape b) et l'étape c) ayant lieu sensiblement simultanément et éventuellement, le déplacement du piston déplaçant la ou les soupapes vers la position fermée, et/ou fermant la sortie de gaz,
le piston comprenant éventuellement une extrémité (728) d'actionneur et la première soupape étant éventuellement un clapet anti-retour, l'extrémité d'actionneur déplaçant éventuellement la première soupape jusqu'à la position ouverte lorsque le piston est déplacé jusqu'à la position déployée, et
éventuellement, lorsque le piston est déplacé jusqu'à la position rétractée, la soupape est autorisée à se déplacer jusqu'à la position fermée.

14. Procédé selon l'une quelconque des revendications de procédé précédentes, le corps de fermeture de sortie comprenant un flotteur et, lorsqu'un niveau de liquide est inférieur à un niveau prédéterminé (88), le flotteur fermant un tube (82) de sortie de gaz,
éventuellement, la sortie de gaz comprenant en outre une soupape (85) de trop-plein et, lorsqu'un niveau de liquide est à un deuxième niveau prédéterminé (89), la soupape de trop-plein fermant l'ouverture de sortie de gaz,
le flotteur comprenant éventuellement une protubérance (83), et une dimension extérieure de la protubérance correspondant sensiblement à une dimension intérieure du tube de sortie et pendant l'étape b), la protubérance est enfoncée dans le tube de sortie
le flotteur comprenant éventuellement un moyen anti-reflux (852), le moyen anti-reflux empêchant du gaz de s'écouler jusque dans la zone de dégazage lorsqu'une pression extérieure est supérieure à une pression à l'intérieur de l'enceinte de dégazage, le moyen anti-reflux empêchant en particulier le gaz de s'écouler dans la zone de dégazage pendant l'étape c).

15. Procédé selon l'une quelconque des revendications de procédé précédentes, le canal d'écoulement principal étant rétréci entre le premier côté et le deuxième côté, un rétrécissement (26) augmentant la pression près du passage d'écoulement dérivé et forçant au moins une partie de l'écoulement principal à entrer dans l'enceinte de dégazage et/ou le canal d'écoulement principal comprenant un séparateur (28) d'écoulement dérivé qui dérive au moins une partie de l'écoulement principal jusque dans la zone de dégazage et/ou le canal d'écoulement principal comprenant une soupape (27) d'écoulement principal configurée pour dériver une partie de l'écoulement principal jusque dans la zone de dégazage, la pression dans la zone de dégazage étant éventuellement augmentée, avant l'étape d), jusqu'à sensiblement la pression présente pendant l'étape a).
